# EUROPÄISCHE PATENTSCHRIFT

(11) **EP 2 886 611 B1**
(45) Veröffentlichungstag und Bekanntmachung des Hinweises auf die Patenterteilung: **18.11.2020**
(21) Anmeldenummer: 15151195.3
(22) Anmeldetag: 11.04.2012
(51) Int. Cl.: C09C 1/22, C09C 1/24, C09C 3/12, C09C 3/00, C09C 3/08

(54) **Hydrophobe, funktionalisierte Partikel**
Hydrophobic, functionalized particles
Particules fonctionnalisées hydrophobes

(30) Priorität: 12.04.2011 EP 11162044
(43) Veröffentlichungstag der Anmeldung: 24.06.2015
(62) Teilanmeldung aus: 12715353.4
(73) Patentinhaber: BASF SE, 67056 Ludwigshafen am Rhein (DE); BASF Corporation, Florham Park, NJ 07932 (US)
(72) Erfinder: Deuerlein, Stephan, 67061 Ludwigshafen (DE); Domke, Imme, 69469 Weinheim (DE); Michailovski, Alexej, 67061 Ludwigshafen (DE); Rieger, Reinhold, 67112 Mutterstadt (DE); Charoensirisomboon, Piyada, 67251 Freinsheim (DE); Blackwood, David F., Long Valley, NJ 07853 (US); Eichholz, Christian, 68165 Mannheim (DE); Bayer, Robert, 74889 Sinsheim (DE); Lösch, Dennis, 67122 Altrip (DE); Shishkov, Igor, 68165 Mannheim (DE)
(74) Vertreter: BASF IP Association

(56) Entgegenhaltungen:
- WO-A1-2006/105600
- FR-A5- 2 038 894
- GB-A- 1 455 616
- US-A- 2 886 460
- US-A- 3 470 021
- US-A- 4 063 958

## Beschreibung

Die vorliegende Erfindung betrifft eine stabile Mischung enthaltend an der Oberfläche modifizierte Partikel, welche erhalten werden durch Umsetzung von Metall- oder Halbmetalloxidpartikeln mit wenigstens einer Verbindung, ausgewählt aus Silizium-enthaltenden Verbindungen, die mindestens einen Metalloxyrest und ggf. weitere Alkoxy- und/oder Hydroxyrest(e) tragen, und wenigstens ein Lösungsmittel, wenigstens eine oberflächenaktive Substanz oder eine Mischung davon, ein Verfahren zu ihrer Herstellung, die Verwendung dieser Partikel in Systemen, in denen diese mit mindestens einem Lösungsmittel in Kontakt gebracht werden, wobei das Massenverhältnis von Lösungsmittel zu modifiziertem Partikel größer als 500 ist, sowie die Verwendung dieser Partikel in Agglomerations-Deagglomerations-Zyklen.

Metall- und/oder Halbmetalloxidpartikel, welche an der Oberfläche mit Silizium-enthaltenden Verbindungen funktionalisiert sind, sind aus dem Stand der Technik bereits bekannt.

WO 2009/059382 A1 offenbart beispielsweise eine hydrophobe Modifikation von mineralischen Füllstoffen und gemischte Polymersysteme. Gemäß diesem Dokument erfolgt die hydrophobe Modifizierung durch Reaktion der entsprechenden mineralischen Partikel mit Silanen, beispielsweise C₃-C₁₂-Alkyl-Trialkoxy-Silanen. Dass die entsprechend hydrophob modifizierten Partikel gemäß WO 2009/059382 A1 besonders stabil in großen Mengen Lösungsmitteln, gegebenenfalls in Gegenwart von oberflächenaktiven Substanzen sind, wird in diesem Dokument nicht offenbart.

WO 2006/105600 A1 betriff ein Verfahren zum Aufbringen einer Silikonbeschichtung auf Metalloxidpartikel und offenbart ein Verfahren, das gekennzeichnet ist durch Herstellen einer wässrigen Suspension von Metalloxidpartikeln in einer Lösung wasserlöslicher Organosilikonmonomere und Zusetzen eines den pH-Wert senkenden Mittels, so dass Polymerisation der wasserlöslicher Organosilikonmonomere unter Bildung silikonbeschichteter Metalloxidpartikel bewirkt wird. In Beispiel 1 wird eine wässrige Lösung von Kaliummethylsilikonat zu einer Suspension von Zinkoxidpartikeln gegeben, so dass eine Suspension entsteht, deren wässrige Phase einen pH-Wert von 12,5 aufweist. Durch Zugabe von Salzsäure wird der pH-Wert auf 7,5 gesenkt, um Methylsilantriol zu bilden, das unter Kondensation ein Siloxanpolymer bildet, so dass mit Polymethlylsilsesquioxan beschichte Partikel erhalten werden.

US 2,886,460 A offenbart Zusammensetzungen umfassend einen anorganischen Feststoff, der eine Oberflächenbeschichtung aus chemisch miteinander kombinierten Organosilylgruppen aufweist, und ein Verfahren zur Herstellung solcher Zusammensetzungen, in dem eine wässrige Dispersion eines anorganischen Feststoffs mit hydroxylierter Oberfläche mit einem wasserlöslichen Organosilikat bei einem pH-Wert im Bereich von 7,0 bis 10,7 in Kontakt gebracht wird. Der anorganische Feststoff kann ein Metalloxidpartikel wie etwa Eisenoxid sein.

GB 1,455,616 A ist gerichtet auf ein einfaches Verfahren zur Bereitstellung eines azinulären magnetischen Eisenoxidpigments, welches daraus hergestellten Aufnahmebändern verbesserte Eigenschaften verleihen kann. Es werden magnetische Eisenoxidpigmente offenbart, die optional mit ein oder mehreren divalenten Fremd-Ionen modifiziert wurden, welche eine Organosilikon-Verbindung enthalten.

US 4,063,958 A offenbart ein Verfahren zur Behandlung feinst getrennter Partikel, welches das Beschichten von feinen Partikeln mit einer im Wesentlichen wasserunlöslichen Metallorganosilikonatschicht durch das Inkontaktbringen einer wässrigen Lösung der feinen Partikel enthaltend ein gelöstes Metallsalz ausgewählt aus der Gruppe bestehend aus Beryllium, Magnesium, Kalzium, Strontium oder Barium mit einer wässrigen Lösung eines Alkalimetallorganosilikonat, umfasst. Es wird jedoch nicht die Beschichtung von magnetischem Eisenoxid, geschweige denn eine stabile Mischung umfassend ein beschichtetes magnetisches Eisenoxid offenbart.

FR 2 038 894 A5 offenbart ein Verfahren zur Behandlung von Titaniumdioxidpigmenten, gekennzeichnet durch das Behandeln des Pigments mit einem oder mehreren Silikonaten ausgewählt aus den Methyl-, Ethyl-, Propyl-, Butyl und Phenylsilikonaten der Alkalimetalle. Jedoch werden keine stabile Mischungen umfassend beschichtete magnetische Eisenoxidpartikel offenbart.

US 3,470,021 A offenbart ein magnetisches Aufnahmematerial enthaltend als essenzielle Bestandteile magnetisierbare Partikel, einen synthetischen polymeren Binder und Oleinsäure. Geeignete Binder umfassen Polyvinylchlorid, Polyvinylacetat, und Polyacrylat, zum Beispiel Polybutylacrylat.

Aufgabe der vorliegenden Erfindung gegenüber dem Stand der Technik ist es somit, an der Oberfläche hydrophobierte Partikel bereitzustellen, welche sich durch eine besonders hohe Stabilität gegenüber großen Mengen Lösungsmitteln und/oder oberflächenaktiven Substanzen auszeichnen.

Diese Aufgabe wird gelöst durch eine stabile Mischung enthaltend an der Oberfläche modifizierte Partikel, welche erhalten werden durch Umsetzung von Metall- oder Halbmetalloxidpartikeln mit wenigstens einer Verbindung der allgemeinen Formel (I)

R¹ₙ-Si(OR²)₄₋ₙ (I)

worin R¹, R² und n die folgenden Bedeutungen haben:
R¹ unabhängig voneinander Wasserstoff, lineares oder verzweigtes, gegebenenfalls funktionalisiertes C₁-C₃₀-Alkyl, lineares oder verzweigtes, gegebenenfalls funktionalisiertes C₂-C₃₀-Alkenyl, lineares oder verzweigtes, gegebenenfalls funktionalisiertes C₂-C₃₀-Alkinyl, gegebenenfalls funktionalisiertes C₃-C₂₀-Cycloalkyl, gegebenenfalls funktionalisiertes C₃-C₂₀-Cycloalkenyl, gegebenenfalls funktionalisiertes C₁-C₂₀-Heteroalkyl, gegebenenfalls funktionalisiertes C₅-C₂₂-Aryl, gegebenenfalls funktionalisiertes C₆-C₂₃-Alkylaryl, gegebenenfalls funktionalisiertes C₆-C₂₃-Arylalkyl, gegebenenfalls funktionalisiertes C₅-C₂₂-Heterorayl,
R² unabhängig voneinander Wasserstoff, lineares oder verzweigtes, gegebenenfalls funktionalisiertes C₁-C₃₀-Alkyl, lineares oder verzweigtes, gegebenenfalls funktionalisiertes C₂-C₃₀-Alkenyl, lineares oder verzweigtes, gegebenenfalls funktionalisiertes C₂-C₃₀-Alkinyl, gegebenenfalls funktionalisiertes C₃-C₂₀-Cycloalkyl, gegebenenfalls funktionalisiertes C₃-C₂₀-Cycloalkenyl, gegebenenfalls funktionalisiertes C₁-C₂₀-Heteroalkyl, gegebenenfalls funktionalisiertes C₅-C₂₂-Aryl, gegebenenfalls funktionalisiertes C₆-C₂₃-Alkylaryl, gegebenenfalls funktionalisiertes C₆-C₂₃-Arylalkyl, gegebenenfalls funktionalisiertes C₅-C₂₂-Heterorayl,
NR¹₄⁺, wobei R¹ unabhängig voneinander die oben genannten Bedeutungen haben kann,
Gruppe der allgemeinen Formel 1/(p-x^{∗}y) M^{p+}X^{x-}_{y}, wobei M Metallatom ausgewählt aus der Gruppe bestehend aus Metallen der Haupt- und Nebengruppen des Periodensystems der Elemente, X ein Anion, p Oxidationszahl des Metallatoms M, x eine ganze Zahl aus 1, 2 oder 3 und y eine ganze Zahl aus 0, 1 oder 2 bedeuten,
und/oder
Gruppe der allgemeinen Formel (IIa)

   -SiR¹ₘ(OR²)₃₋ₘ (IIa),

   wobei R¹ und R² unabhängig voneinander die oben genannten Bedeutungen haben und m unabhängig voneinander 0, 1, 2 oder 3 bedeuten kann,
   n 1, 2 oder 3,
   und wenigstens ein Lösungsmittel, wenigstens eine oberflächenaktive Substanz oder eine Mischung davon, wobei in der Verbindung der allgemeinen Formel (I) oder in der Gruppe der allgemeinen Formel (IIa) mindestens ein Rest R² NR¹₄⁺ oder eine Gruppe der allgemeinen Formel 1/(p-x^{∗}y) M^{p+}X^{x-}_{y} mit den oben genannten Bedeutungen für R¹, p, x, y, M und X ist.

Hat R² in der Verbindung der allgemeinen Formel (I) mehrmals, beispielsweise mehr als einmal, die Bedeutung einer Gruppe der allgemeinen Formel (IIa), so liegen entsprechende Verbindungen vor, die zwei, drei, vier oder mehr Einheiten mit Si-Atomen tragen. Daher liegen für den Fall, dass R² mehrmals eine Gruppe der allgemeinen Formel (IIa) bedeutet, Polysiloxane vor.

Des Weiteren wird die Aufgabe gelöst durch die Verwendung der erfindungsgemäßen, an der Oberfläche modifizierten Partikel in Systemen, in denen die modifizierten Partikel mit mindestens einem Lösungsmittel in Kontakt gebracht werden, wobei das Massenverhältnis von Lösungsmittel zu modifiziertem Partikel größer als 500 ist.

Die erfindungsgemäße Aufgabe wird auch gelöst durch die Verwendung von an der Oberfläche modifizierten, erfindungsgemäßen Partikeln in Agglomerations-Deagglomerations-Zyklen.

Die erfindungsgemäße stabile Mischung enthält an der Oberfläche modifizierte Partikel, welche erhalten werden durch Umsetzung von Metall- oder Halbmetalloxidpartikeln mit wenigstens einer Verbindung der allgemeinen Formel (I) oder einem Polysiloxan der allgemeinen Formel (I), enthaltend Gruppen der allgemeinen Formel (IIa).

Im Rahmen der vorliegenden Erfindung können im Allgemeinen alle dem Fachmann bekannten Metall- oder Halbmetalloxidpartikel, insbesondere Metalloxidpartikel, eingesetzt werden. Beispiele für erfindungsgemäß besonders geeignete Metalloxide sind die Oxide der Metalle der Haupt- und Nebengruppen des Periodensystems der Elemente, insbesondere der Nebengruppen des Periodensystems der Elemente.

Erfindungsgemäß ist Siliziumoxid als Halbmetalloxid nicht bevorzugt und ist daher in einer bevorzugten Ausführungsform von der vorliegenden Erfindung nicht umfasst.

In einer bevorzugten Ausführungsform betrifft die vorliegende Erfindung daher die erfindungsgemäße Mischung, wobei Siliziumdioxid als Halbmetalloxid ausgenommen ist.

Beispiele für geeignete Metalle der Hauptgruppen des Periodensystems der Elemente sind die Alkalimetalle, beispielsweise Li, Na, K, Rb, Cs, Erdalkalimetalle, beispielsweise Be, Mg, Ca, Ba, Sr, der dritten Hauptgruppe des Periodensystems der Elemente, beispielsweise Al, Ga, In, Tl, der vierten Hauptgruppe des Periodensystems der Elemente, beispielsweise Sn, Pb oder der fünften Hauptgruppe des Periodensystems der Elemente, beispielsweise Sb, Bi.

Beispiele für geeignete Metalle der Nebengruppen des Periodensystems der Elemente sind Sc, Y, die Lanthanide, die Actinide, Ti, Zr, Hf, Mn, Re, Fe, Ru, Os, Co, Rh, Ir, Ni, Pd, Pt, Cu, Ag, Au, Zn und Cd.

In einer bevorzugten Ausführungsform ist das erfindungsgemäß eingesetzte Metalloxid ein Oxid der Metalle ausgewählt aus der Gruppe bestehend aus Li, Na, K, Rb, Cs, Be, Mg, Ca, Ba, Sr, AI, Ga, In, Tl, Sn, Pb, Sb, Bi, Sc, Y, den Lanthaniden, den Actiniden, Ti, Zr, Hf, Mn, Re, Fe, Ru, Os, Co, Rh, Ir, Ni, Pd, Pt, Cu, Ag, Au, Zn, Cd und Mischungen davon, ganz besonders bevorzugt ausgewählt aus der Gruppe bestehend aus Mn, Fe, Co, Ni, Cu und Kombinationen davon. Des Weiteren sind erfindungsgemäß auch gemischte Oxide dieser Metalle, insbesondere Mn, Fe, Co, Ni oder Cu, mit wenigstens einem Erdalkalimetall, beispielsweise Mg, Ca, Sr und/oder Ba, geeignet.

Die vorliegende Erfindung betrifft daher bevorzugt die erfindungsgemäße Mischung, wobei das eingesetzte Metalloxid ein Oxid eines Metalls ausgewählt aus der Gruppe bestehend aus Mn, Fe, Co, Ni, Cu, Kombinationen davon und gemischten Oxiden dieser Metalle mit wenigstens einem Erdalkalimetall, beispielsweise Mg, Ca, Sr und/oder Ba ist.

In einer besonders bevorzugten Ausführungsform betrifft die vorliegende Erfindung die erfindungsgemäße Mischung, wobei die Metalloxid- oder Halbmetalloxidpartikel magnetisch sind.

Ganz besonders bevorzugte Metalloxide sind Eisenoxide, beispielsweise Fe₂O₃, magnetische Eisenoxide, beispielsweise Magnetit, Maghemit, Hämatit, kubische Ferrite der allgemeinen Formel (III)

M²⁺ₓFe²⁺₁₋ₓFe³⁺₂O₄ (III)

mit
M ausgewählt aus Co, Ni, Mn, Zn und Mischungen davon und
x ≤ 1,
hexagonale Ferrite, beispielsweise Calcium-, Barium- oder Strontiumferrit MFe₆O₁₉ mit M = Ca, Sr, Ba, und Kombinationen davon.

In einer bevorzugten Ausführungsform ist das erfindungsgemäß eingesetzte Metalloxid ein magnetisches Eisenoxid ausgewählt aus der oben genannten Gruppe. In einer ganz besonders bevorzugten Ausführungsform ist das wenigstens eine erfindungsgemäß eingesetzte Metalloxid Magnetit. Magnetit weist die Formel Fe₃O₄, insbesondere Fe^{II}Fe^{III}₂O₄, auf und ist dem Fachmann bekannt. Magnetit kann nach bekannten Verfahren hergestellt werden und ist kommerziell erhältlich.

Die erfindungsgemäß eingesetzten Metalloxidpartikel können gegebenenfalls noch weitere Dotierungsmittel, beispielsweise weitere Metalle in oxidischer oder elementarer Form enthalten, beispielsweise Edelmetalle wie Platin.

Die erfindungsgemäß vorliegenden Partikel weisen im Allgemeinen eine Teilchengröße von 50 nm bis 500 µm, bevorzugt 200 nm bis 100 µm, besonders bevorzugt 500 nm bis 10 µm, auf.

Die erfindungsgemäß vorliegenden Partikel können im Allgemeinen jedwede Form aufweisen, beispielsweise kugelförmig, zylindrisch, nadelförmig oder backsteinförmig.

In der erfindungsgemäßen, stabilen Mischung liegen an der Oberfläche modifizierte Partikel vor, welche erhalten werden durch Umsetzung von Metall- oder Halbmetalloxidpartikeln mit wenigstens einer Verbindung der allgemeinen Formel (I)

R¹ₙ-Si(OR²)₄₋ₙ (I)

worin R¹, R² und n die oben genannten Bedeutungen haben, wobei erfindungswesentlich ist, dass in der Verbindung der allgemeinen Formel (I) oder in der Gruppe der allgemeinen Formel (IIa) mindestens ein Rest R² NR¹₄⁺ oder eine Gruppe der allgemeinen Formel 1/(p-x^{∗}y) M^{p+}X^{x-}_{y} mit den oben genannten Bedeutungen für R¹, p, x, y, M und X ist.

Des Weiteren betrifft die vorliegende Erfindung eine stabile Mischung enthaltend an der Oberfläche modifizierte Partikel, welche erhalten werden durch Umsetzung von Metall- oder Halbmetalloxidpartikeln mit wenigstens einer Verbindung der allgemeinen Formel (I)

R¹ₙ-Si(OR²)₄₋ₙ (I)

worin R¹, R² und n die oben genannten Bedeutungen haben, wobei erfindungswesentlich ist, dass in der Verbindung der allgemeinen Formel (I) oder in der Gruppe der allgemeinen Formel (IIa) mindestens ein Rest R² NR¹₄⁺ oder eine Gruppe der allgemeinen Formel 1/(p-x^{∗}y) M^{p+}X^{x-}_{y} mit den oben genannten Bedeutungen für R¹, p, x, y, M und X ist.

Bevorzugt is R¹ unabhängig voneinander ein lineares oder verzweigtes, gegebenenfalls funktionalisiertes C₁-C₃₀-Alkyl, besonders bevorzugt C₁-C₂₀-Alkyl, ganz besonders bevorzugt C₄-C₁₂-Alkyl. In einer bevorzugten Ausführungsform ist R¹ ein lineares oder verzweigtes, nicht funktionalisiertes C₁-C₃₀-Alkyl, besonders bevorzugt C₁-C₂₀-Alkyl, ganz besonders bevorzugt C₄-C₁₂-Alkyl. Beispiele für lineare oder verzweigte C₄-C₁₂-Alkylreste sind Butyl, insbesondere n-Butyl, iso-Butyl, tert.-Butyl, Pentyl, insbesondere n-Pentyl, iso-Pentyl, tert.-Pentyl, Hexyl, insbesondere n-Hexyl, iso-Hexyl, tert.-Hexyl, Heptyl, insbesondere n-Heptyl, iso-Heptyl, tert.-Heptyl, Octyl, insbesondere n-Octyl, iso-Octyl, tert.-Octyl, Nonyl, insbesondere n-Nonyl, iso-Nonyl, tert.-Nonyl, Decyl, insbesondere n-Decyl, iso-Decyl, tert.-Decyl, Undecyl, insbesondere n-Undecyl, iso-Undecyl, tert.-Undecyl, oder Dodecyl, insbesondere n-Dodecyl, iso-Dodecyl, tert.-Dodecyl.

Weiter bevorzugt ist R¹ unabhängig voneinander ein lineares oder verzweigtes, gegebenenfalls funktionalisiertes C₂-C₃₀-Alkenyl, besonders bevorzugt C₂-C₂₀-Alkenyl, ganz besonders bevorzugt C₂-, C₃- oder C₄-C₁₂-Alkenyl. Beispiele für erfindungsgemäß besonders bevorzugte Alkenylreste sind Ethenyl (Vinyl), Propenyl, insbesondere n-Propenyl, iso-Propenyl, Butenyl, insbesondere n-Butenyl, iso-Butenyl, tert.-Butenyl, Pentenyl, insbesondere n-Pentenyl, iso-Pentenyl, tert.-Pentenyl, Hexenyl, insbesondere n-Hexenyl, iso-Hexenyl, tert.-Hexenyl, Heptenyl, insbesondere n-Heptenyl, iso-Heptenyl, tert.-Heptenyl, Octenyl, insbesondere n-Octenyl, iso-Octenyl, tert.-Octenyl, Nonenyl, insbesondere n-Nonenyl, iso-Nonenyl, tert.-Nonenyl, Decenyl, insbesondere n-Decenyl, iso-Decenyl, tert.-Decenyl, Undecenyl, insbesondere n-Undecenyl, iso-Undecenyl, tert.-Undecenyl, oder Dodecenyl, insbesondere n-Dodecenyl, iso-Dodecenyl, tert.-Dodecenyl.

Weiter bevorzugt ist R¹ unabhängig voneinander ein lineares oder verzweigtes, gegebenenfalls funktionalisiertes C₂-C₃₀-Alkinyl, besonders bevorzugt C₂-C₂₀-Alkinyl, ganz besonders bevorzugt C₂-, C₃- oder C₄-C₁₂-Alkinyl. Beispiele für erfindungsgemäß besonders bevorzugte Alkenylreste sind Ethinyl, Propinyl, insbesondere n-Propinyl, iso-Propinyl, Butinyl, insbesondere n-Butinyl, iso-Butinyl, tert.-Butinyl, Pentinyl, insbesondere n-Pentinyl, iso-Pentinyl, tert.-Pentinyl, Hexinyl, insbesondere n-Hexinyl, iso-Hexinyl, tert.-Hexinyl, Heptinyl, insbesondere n-Heptinyl, iso-Heptinyl, tert.-Heptinyl, Octinyl, insbesondere n-Octinyl, iso-Octinyl, tert.-Octinyl, Nonenyl, insbesondere n-Noninyl, iso-Noninyl, tert.-Noninyl, Decinyl, insbesondere n-Decinyl, iso-Decinyl, tert.-Decinyl, Undecinyl, insbesondere n-Undecinyl, iso-Undecinyl, tert.-Undecinyl, oder Dodecinyl, insbesondere n-Dodecinyl, iso-Dodecinyl, tert.-Dodecinyl.

Weiter bevorzugt ist R¹ unabhängig voneinander ein gegebenenfalls funktionalisiertes C₃-C₂₀-Cycloalkyl, besonders bevorzugt C₃-C₁₂-Cycloalkyl, ganz besonders bevorzugt C₃-C₆-Cycloalkyl, beispielsweise Cyclopropyl, Cyclobutyl, Cyclopentyl, Cyclohexyl.

Weiter bevorzugt ist R¹ unabhängig voneinander ein gegebenenfalls funktionalisiertes C₃-C₂₀-Cycloalkenyl, besonders bevorzugt C₃-C₁₂-Cycloalkenyl, ganz besonders bevorzugt C₃-C₆-Cycloalkenyl, beispielsweise Cyclopropenyl, Cyclobutenyl, Cyclopentenyl, Cyclohexenyl.

Weiter bevorzugt ist R¹ unabhängig voneinander ein gegebenenfalls funktionalisiertes C₁-C₂₀-Heteroalkyl, besonders bevorzugt C₁-C₁₂-Heteroalkyl. Die erfindungsgemäß vorliegenden Heteroalkylreste leiten sich von den genannten Alkylresten ab, wobei mindestens ein Kohlenstoffatom durch ein Heteroatom ausgewählt aus N, O, P oder S ersetzt ist.

Weiter bevorzugt ist R¹ unabhängig voneinander ein gegebenenfalls funktionalisiertes C₅-C₂₂-Aryl, besonders bevorzugt C₅-C₁₂-Aryl. Beispiele für erfindungsgemäß bevorzugte Arylreste sind Phenyl, Naphthyl oder Biaryle.

Weiter bevorzugt ist R¹ unabhängig voneinander ein gegebenenfalls funktionalisiertes C₆-C₂₃-Alkylaryl, besonders bevorzugt C₆-C₁₃-Alkylaryl. Ein Beispiel für einen erfindungsgemäß bevorzugten Alkylarylrest ist Benzyl.

Weiter bevorzugt ist R¹ unabhängig voneinander ein gegebenenfalls funktionalisiertes C₆-C₂₃-Arylalkyl, besonders bevorzugt C₆-C₁₃-Arylalkyl. Beispiele für erfindungsgemäß bevorzugte Arylalkylreste sind Toluyl, Xylyl, Propylbenzyl, Hexylbenzyl.

Weiter bevorzugt ist R¹ unabhängig voneinander ein gegebenenfalls funktionalisiertes C₅-C₂₂-Heteroaryl, besonders bevorzugt C₅-C₁₂-Heteroaryl.

Die genannten Reste R¹ können gegebenenfalls funktionalisiert sein. Geeignete funktionelle Gruppen sind beispielsweise ausgewählt aus Amino-, Amido-, Imido-, Hydroxy-, Ether-, Aldehyd-, Keto-, Carbonsäure-, Thiol-, Thioether-, Hydroxamat- oder Carbamatgruppen. Die genannten Reste R¹ können einfach oder mehrfach funktionalisiert sein. Bei mehrfacher Funktionalisierung kann eine funktionelle Gruppe mehrfach vorliegen, oder es liegen verschiedene funktionelle Gruppen gleichzeitig vor. Die für R¹ genannten Reste können darüber hinaus auch mit den genannten Alkyl-, Alkenyl-, Alkinyl-, Aryl-, Alkylaryl-, Arylalkyl-, Heteroalkyl- oder Heteroarylresten einfach oder mehrfach substituiert sein.

Ganz besonders bevorzugte Reste R¹ sind Octyl, besonders n-Octyl, Hexyl, besonders n-Hexyl und/oder Butyl, besonders n-Butyl, Decyl, besonders n-Decyl, oder Dodecyl, besonders n-Dodecyl.

"Unabhängig voneinander" bedeutet im Rahmen der vorliegenden Erfindung, dass, falls in der Verbindung der allgemeinen Formel (I) bzw. der Gruppe der allgemeinen Formel (IIa) mehrere Reste R¹ vorliegen, diese gleich oder unterschiedlich sein können.

Bevorzugt ist R² unabhängig voneinander Wasserstoff, ein lineares oder verzweigtes, gegebenenfalls funktionalisiertes C₁-C₃₀-Alkyl, besonders bevorzugt C₁-C₂₀-Alkyl, ganz besonders bevorzugt C₁-C₁₂-Alkyl. In einer bevorzugten Ausführungsform ist R² ein lineares oder verzweigtes, nicht funktionalisiertes C₁-C₃₀-Alkyl, besonders bevorzugt C₁-C₂₀-Alkyl, ganz besonders bevorzugt C₁-C₁₂-Alkyl. Beispiele für lineare oder verzweigte C₁-C₁₂-Alkylreste sind Methyl, Ethyl, Propyl, insbesondere n-Propyl, iso-Propyl, Butyl, insbesondere n-Butyl, iso-Butyl, tert.-Butyl, Pentyl, insbesondere n-Pentyl, iso-Pentyl, tert.-Pentyl, Hexyl, insbesondere n-Hexyl, iso-Hexyl, tert.-Hexyl, Heptyl, insbesondere n-Heptyl, iso-Heptyl, tert.-Heptyl, Octyl, insbesondere n-Octyl, iso-Octyl, tert.-Octyl, Nonyl, insbesondere n-Nonyl, iso-Nonyl, tert.-Nonyl, Decyl, insbesondere n-Decyl, iso-Decyl, tert.-Decyl, Undecyl, insbesondere n-Undecyl, iso-Undecyl, tert.-Undecyl, oder Dodecyl, insbesondere n-Dodecyl, iso-Dodecyl, tert.-Dodecyl.

Weiter bevorzugt ist R² unabhängig voneinander ein lineares oder verzweigtes, gegebenenfalls funktionalisiertes C₂-C₃₀-Alkenyl, besonders bevorzugt C₂-C₂₀-Alkenyl, ganz besonders bevorzugt C₂-C₁₂-Alkenyl. Beispiele für erfindungsgemäß besonders bevorzugte Alkenylreste sind Ethenyl (Vinyl), Propenyl, insbesondere n-Propenyl, iso-Propenyl, Butenyl, insbesondere n-Butenyl, iso-Butenyl, tert.-Butenyl, Pentenyl, insbesondere n-Pentenyl, iso-Pentenyl, tert.-Pentenyl, Hexenyl, insbesondere n-Hexenyl, iso-Hexenyl, tert.-Hexenyl, Heptenyl, insbesondere n-Heptenyl, iso-Heptenyl, tert.-Heptenyl, Octenyl, insbesondere n-Octenyl, iso-Octenyl, tert.-Octenyl, Nonenyl, insbesondere n-Nonenyl, iso-Nonenyl, tert.-Nonenyl, Decenyl, insbesondere n-Decenyl, iso-Decenyl, tert.-Decenyl, Undecenyl, insbesondere n-Undecenyl, iso-Undecenyl, tert.-Undecenyl, oder Dodecenyl, insbesondere n-Dodecenyl, iso-Dodecenyl, tert.-Dodecenyl.

Weiter bevorzugt ist R² unabhängig voneinander ein lineares oder verzweigtes, gegebenenfalls funktionalisiertes C₂-C₃₀-Alkinyl, besonders bevorzugt C₂-C₂₀-Alkinyl, ganz besonders bevorzugt C₂-C₁₂-Alkinyl. Beispiele für erfindungsgemäß besonders bevorzugte Alkenylreste sind Ethinyl, Propinyl, insbesondere n-Propinyl, iso-Propinyl, Butinyl, insbesondere n-Butinyl, iso-Butinyl, tert.-Butinyl, Pentinyl, insbesondere n-Pentinyl, iso-Pentinyl, tert.-Pentinyl, Hexinyl, insbesondere n-Hexinyl, iso-Hexinyl, tert.-Hexinyl, Heptinyl, insbesondere n-Heptinyl, iso-Heptinyl, tert.-Heptinyl, Octinyl, insbesondere n-Octinyl, iso-Octinyl, tert.-Octinyl, Noninyl, insbesondere n-Noninyl, iso-Noninyl, tert.-Noninyl, Decinyl, insbesondere n-Decinyl, iso-Decinyl, tert.-Decinyl, Undecinyl, insbesondere n-Undecinyl, iso-Undecinyl, tert.-Undecinyl, oder Dodecinyl, insbesondere n-Dodecinyl, iso-Dodecinyl, tert.-Dodecinyl.

Weiter bevorzugt ist R² unabhängig voneinander ein gegebenenfalls funktionalisiertes C₃-C₂₀-Cycloalkyl, besonders bevorzugt C₃-C₁₂-Cycloalkyl, besonders bevorzugt C₃-C₆-Cycloalkyl, beispielsweise Cyclopropyl, Cyclobutyl, Cyclopentyl, Cyclohexyl.

Weiter bevorzugt ist R² unabhängig voneinander ein gegebenenfalls funktionalisiertes C₃-C₂₀-Cycloalkenyl, besonders bevorzugt C₃-C₁₂-Cycloalkenyl, ganz besonders bevorzugt C₃-C₆-Cycloalkenyl, beispielsweise Cyclopropenyl, Cyclobutenyl, Cyclopentenyl, Cyclohexenyl.

Weiter bevorzugt ist R² unabhängig voneinander ein gegebenenfalls funktionalisiertes C₁-C₂₀-Heteroalkyl, besonders bevorzugt C₄-C₁₂-Heteroalkyl. Die erfindungsgemäß vorliegenden Heteroalkylreste leiten sich von den genannten Alkylresten ab, wobei mindestens ein Kohlenstoffatom durch ein Heteroatom ausgewählt aus N, O, P oder S ersetzt ist.

Weiter bevorzugt ist R² unabhängig voneinander ein gegebenenfalls funktionalisiertes C₅-C₂₂-Aryl, besonders bevorzugt C₅-C₁₂-Aryl. Beispiele für erfindungsgemäß bevorzugte Arylreste sind Phenyl, Naphthyl oder Biaryle.

Weiter bevorzugt ist R² unabhängig voneinander ein gegebenenfalls funktionalisiertes C₆-C₂₃-Alkylaryl, besonders bevorzugt C₆-C₁₃-Alkylaryl. Ein Beispiel für einen erfindungsgemäß bevorzugten Alkylarylrest ist Benzyl.

Weiter bevorzugt ist R² unabhängig voneinander ein gegebenenfalls funktionalisiertes C₆-C₂₃-Arylalkyl, besonders bevorzugt C₆-C₁₃-Arylalkyl. Beispiele für erfindungsgemäß bevorzugte Arylalkylreste sind Toluyl, Xylyl, Propylbenzyl, Hexylbenzyl.

Weiter bevorzugt ist R² unabhängig voneinander ein gegebenenfalls funktionalisiertes C₅-C₂₂-Heterorayl, besonders bevorzugt C₅-C₁₂-Heteroaryl.

Die genannten Reste R² können gegebenenfalls funktionalisiert sein. Geeignete funktionelle Gruppen sind beispielsweise ausgewählt aus Amino-, Amido-, Imido-, Hydroxy-, Ether-, Aldehyd-, Keto-, Carbonsäure-, Thiol-, Thioether-, Hydroxamat- oder Carbamatgruppen. Die genannten Reste R¹ können einfach oder mehrfach funktionalisiert sein. Bei mehrfacher Funktionalisierung kann eine funktionelle Gruppe mehrfach vorliegen, oder es liegen verschiedene funktionelle Gruppen gleichzeitig vor. Die für R² genannten Reste können darüber hinaus auch mit den genannten Alkyl-, Alkenyl-, Alkinyl-, Aryl-, Alkylaryl-, Arylalkyl-, Heteroalkyl- oder Heteroarylresten einfach oder mehrfach substituiert sein.

Es ist erfindungswesentlich, dass in der Verbindung der allgemeinen Formel (I) oder in der Gruppe der allgemeinen Formel (IIa) mindestens ein Rest R² NR¹₄⁺ oder eine Gruppe der allgemeinen Formel 1/(p-x^{∗}y) M^{p+}X^{x-}_{y} mit den oben genannten Bedeutungen für R¹, p, x, y, M und X ist.

In einer Ausführungsform ist mindestens ein R² NR¹₄⁺. In diesem Fall kann R¹ unabhängig voneinander die oben genannten Bedeutungen aufweisen, insbesondere bevorzugt ist in diesem Fall R¹ gleich Wasserstoff, Methyl, Ethyl, Propyl, besonders n-Propyl, Octyl, besonders n-Octyl, Hexyl, besonders n-Hexyl und/oder Butyl, besonders n-Butyl, Decyl, besonders n-Decyl, oder Dodecyl, besonders n-Dodecyl.

In einer weiteren bevorzugten Ausführungsform ist mindestens ein R² eine Gruppe der allgemeinen Formel 1/(p-x^{∗}y) M^{p+}X^{x-}_{y}, wobei M Metallatom ausgewählt ist aus der Gruppe bestehend aus Metallen der Haupt- und Nebengruppen des Periodensystems der Elemente, X ein Anion, p Oxidationszahl des Metallatoms M, x eine ganze Zahl aus 1, 2 oder 3 und y eine ganze Zahl aus 0, 1 oder 2 bedeuten,
X bedeutet in der genannten allgemeinen Formel im Allgemeinen ein Anion, beispielsweise ausgewählt aus der Gruppe bestehend aus Cl⁻, NO₃⁻, SO₄²⁻ oder PO₄³⁻. Für diese bevorzugten Ausführungsformen bedeutet x gleich 1, 2 bzw. 3, und entspricht somit der negativen Formalladung der Anionen.

Die Anzahl der in der genannten Gruppe vorliegenden Anionen wird beschrieben durch y. Bevorzugt bedeutet y daher 0, 1 oder 2, d. h. es liegen kein, ein oder zwei weitere(s) Anion(en) in der genannten Gruppierung vor.

In einer bevorzugten Ausführungsform ist p 1, 2, 3, 4, 5, 6 oder 7, besonders bevorzugt ist p 1, 2, oder 3.

Da in der Verbindung der allgemeinen Formel (I), gegebenenfalls enthaltend mindestens eine Gruppe der allgemeinen Formel (IIa) mindestens ein R² NR¹₄⁺ oder eine Gruppe der allgemeinen Formel 1/(p-x^{∗}y) M^{p+}X^{x-}_{y} ist, bedeutet dies, dass erfindungsgemäß als Verbindung der allgemeinen Formel (I) ein Salz eingesetzt wird. Die positive Formalladung(en) des Ammoniumkations NR¹₄⁺ bzw. der Gruppierung 1/(p-x^{∗}y) M^{p+}X^{x-}_{y} wird/werden in dieser Ausführungsform durch die negative Formalladung des Sauerstoffatoms kompensiert. Erfindungsgemäß eingesetzte Verbindungen der allgemeinen Formel (I), in denen mindestens ein R² NR¹₄⁺ oder eine Gruppe der allgemeinen Formel 1/(p-x^{∗}y) M^{p+}X^{x-}_{y} bedeutet, sind in einer besonders bevorzugten Ausführungsform neutral geladen.

Der Faktor 1/(p-x^{∗}y) ist erfindungswesentlich, da die molare Menge an Metall abhängig ist von der Wertigkeit des vorliegenden Metalls und der Anzahl und Wertigkeit der gegebenenfalls vorliegenden Anionen. Werden beispielsweise Metallatome eingesetzt, die in der Oxidationsstufe +3 vorliegen, d. h. p ist gleich 3, so entspricht in Abwesenheit weiterer Anionen X die molare Menge an Verbindung der allgemeinen Formel (I) dreimal der molaren Menge an Metall, um ein neutral geladenes Si-enthaltendes Salz zu erhalten. Werden beispielsweise Metallatome eingesetzt, die in der Oxidationsstufe +2 vorliegen, d. h. p ist gleich 2, so entspricht in Abwesenheit weiterer Anionen X die molare Menge an Verbindung der allgemeinen Formel (I) der doppelten molaren Menge an Metall, um ein neutral geladenes Si-enthaltendes Salz zu erhalten. Werden beispielsweise Metallatome eingesetzt, die in der Oxidationsstufe +1 vorliegen, d. h. p ist gleich 1, so entspricht in Abwesenheit weiterer Anionen X die molare Menge an Verbindung der allgemeinen Formel (I) der molaren Menge an Metall, um ein neutral geladenes Si-enthaltendes Salz zu erhalten. Bei Mischungen von Metallatomen mit verschiedenen Wertigkeiten bzw. bei Vorliegenden bestimmter Mengen an Anionen mit bestimmten Ladungen berechnet sich das Verhältnis entsprechend.

Erfindungsgemäß sind mehrere Ausführungsformen möglich:
Wird als Kation M^{p+} ein einwertiges Kation wie Na⁺, K⁺ etc. eingesetzt, so liegt in jeder Gruppe der allgemeinen Formel 1/(p-x^{∗}y) M^{p+}X^{x-}_{y} ein solches Kation vor.

Wird als Kation M^{p+} ein zweiwertiges Kation wie Ca²⁺ etc. eingesetzt, so weist der Faktor 1/(p-x^{∗}y) bei Abwesenheit weiterer Anionen, d. h. y ist gleich Null, den Wert 0,5 auf, d. h. pro Gruppe R² liegen rechnerisch 0,5 Äquivalente Ca²⁺ vor. Dies kann erfindungsgemäß entweder realisiert werden, indem in einer Verbindung der allgemeinen Formel (I) oder (IIa) zwei negativ geladene Sauerstoffatome vorliegen, deren insgesamt zwei vorliegende negative Ladungen durch ein Ca²⁺-Kation neutralisiert werden, so dass jedes Sauerstoffanion rechnerisch von 0,5 Ca²⁺ neutralisiert wird. Es ist erfinderisch auch möglich, dass in zwei Verbindungen der allgemeinen Formel (I) oder (IIa) jeweils ein negativ geladenes Sauerstoffatom vorliegt, deren insgesamt zwei vorliegende negative Ladungen durch ein Ca²⁺-Kation neutralisiert werden, so dass jedes Sauerstoffanion rechnerisch von 0,5 Ca²⁺ neutralisiert wird. Es sind erfindungsgemäß auch Mischformen dieser Ausführungsformen möglich.

Bei mehrwertigen Kationen oder bei Mischungen verschiedener Kationen, gegebenenfalls mit unterschiedlichen Oxidationszahlen, gilt Entsprechendes.

Im Allgemeinen ist M ausgewählt aus Metallen der Haupt- und Nebengruppen des Periodensystems der Elemente, bevorzugt aus den Gruppen 1, 2 und 13 (IUPAC-Nomenklatur). Bevorzugt ist M ausgewählt aus der Gruppe der der Alkalimetalle, beispielsweise Li, Na, K, Rb, Cs, Fr, bevorzugt Li⁺, Na⁺, K⁺, Rb⁺, Cs⁺, Fr⁺, mit p jeweils gleich 1, aus der Gruppe der Erdalkalimetalle, beispielsweise Be, Mg, Ca, Sr, Ba, Ra, bevorzugt Be²⁺, Mg²⁺, Ca²⁺, Sr²⁺, Ba²⁺, Ra²⁺, mit p jeweils gleich 2, und/oder aus Gruppe 13 des Periodensystems der Elemente, beispielsweise B, Al, Ga, In, Tl, bevorzugt B³⁺, Al³⁺, Ga³⁺, In³⁺, Tl³⁺, mit p jeweils gleich 3.

Die vorliegende Erfindung betrifft daher bevorzugt die erfindungsgemäße Mischung, wobei M^{p+} ausgewählt ist aus der Gruppe 1, 2 oder 13 des Periodensystems der Elemente (IUPAC Nomenklatur).

In einer besonders bevorzugten Ausführungsform ist in der Verbindung der allgemeinen Formel (I) oder in der Gruppe der allgemeinen Formel (IIa) mindestens ein R² unabhängig voneinander eine Gruppe der allgemeinen Formel 1/(p-x^{∗}y) M^{p+}X^{x-}_{y} mit p gleich 1, y gleich 0 und M gleich Na und/oder K.

Die vorliegende Erfindung betrifft daher bevorzugt die erfindungsgemäße Mischung, wobei in der Verbindung der allgemeinen Formel (I) oder in der Gruppe der allgemeinen Formel (IIa) mindestens ein R² unabhängig voneinander eine Gruppe der allgemeinen Formel 1/(p-x^{∗}y) M^{p+}X^{x-}_{y} mit p gleich 1, y gleich 0 und M gleich Na und/oder K ist.

In einer weiteren bevorzugten Ausführungsform ist R² eine Gruppe der allgemeinen Formel (IIa)

-SiR¹ₘ(OR²)₃₋ₘ (IIa),

wobei R¹ und R² unabhängig voneinander die oben genannten Bedeutungen haben und m unabhängig voneinander 0, 1, 2 oder 3, bevorzugt 1 oder 2, bedeuten kann. Die Anbindung dieser Gruppe der allgemeinen Formel (IIa) an die Verbindung der allgemeinen Formel (I) erfolgt dabei über die freie Bindung am Si-Atom.

In einer besonders bevorzugten Ausführungsform bedeutet R¹ in der Gruppe der allgemeinen Formel (IIa) unabhängig voneinander Wasserstoff, Methyl, Ethyl, Octyl, besonders n-Octyl, Hexyl, besonders n-Hexyl und/oder Butyl, besonders n-Butyl, Decyl, besonders n-Decyl, oder Dodecyl, besonders n-Dodecyl.

In einer besonders bevorzugten Ausführungsform bedeutet R² in der Gruppe der allgemeinen Formel (IIa) unabhängig voneinander Methyl oder Ethyl.

In einer besonders bevorzugten Ausführungsform ist in der Gruppe der allgemeinen Formel (IIa) mindestens ein R² unabhängig voneinander eine Gruppe der allgemeinen Formel 1/(p-x^{∗}y) M^{p+}X^{x-}_{y} mit p gleich 1, y gleich 0 und M gleich Na und/oder K.

Die vorliegende Erfindung betrifft daher bevorzugt die erfindungsgemäße Mischung, wobei in der Gruppe der allgemeinen Formel (IIa) mindestens ein R² unabhängig voneinander eine Gruppe der allgemeinen Formel 1/(p-x^{∗}y) M^{p+}X^{x-}_{y} mit p gleich 1, y gleich 0 und M gleich Na und/oder K ist.

Liegen in der Verbindung der allgemeinen Formel (I) wiederholt Gruppen der allgemeinen Formel (IIa) vor, so werden erfindungsgemäß Polysiloxane als Verbindungen der allgemeinen Formel (I) eingesetzt. Werden erfindungsgemäß Polysiloxane enthaltend Gruppen der allgemeinen Formel (IIa) eingesetzt, so können diese linear oder verzweigt sein. Erfindungsgemäß eingesetzte Polysiloxane enthaltend Gruppen der allgemeinen Formel (IIa) weisen im Allgemeinen ein Molekulargewicht von 250 bis 200.000 g/mol, bevorzugt 250 bis 20.000 g/mol, besonders bevorzugt 300 bis 5.000 g/mol auf.

"Unabhängig voneinander" bedeutet im Rahmen der vorliegenden Erfindung, dass, falls in der Verbindung der allgemeinen Formel (I) oder (IIa) mehrere Reste R² vorliegen, diese gleich oder unterschiedlich sein können.

In der Verbindung der allgemeinen Formel (I) bedeutet n im Allgemeinen 1, 2 oder 3. Bevorzugt bedeutet n in der Verbindung der allgemeinen Formel (I) 1 oder 2. Besonders bevorzugt bedeutet n in der Verbindung der allgemeinen Formel (I) 1.

Daher betrifft die vorliegende Erfindung bevorzugt die erfindungsgemäße Mischung, wobei in der Verbindung der allgemeinen Formel (I) n 1 oder 2, besonders bevorzugt 1, ist.

In den Polysiloxanen der allgemeinen Formel (I) enthaltend Gruppen der allgemeinen Formel (IIa) bedeutet m im Allgemeinen unabhängig voneinander 0, 1, 2 oder 3, bevorzugt 1 oder 2.

Erfindungsgemäß besonders bevorzugte Verbindung der allgemeinen Formel (I) sind ausgewählt aus der Gruppe von Salzen bestehend aus
Rⁱₙ-Si(OR²)₄₋ₙ mit R¹ gleich Methyl, Ethyl, Butyl, Pentyl, Hexyl, Octyl, Decyl und/oder Dodecyl, R² gleich Na, K und/oder NH₄ und n gleich 1, 2 oder 3,
oder
R¹ₙ-Si(OR²)₄₋ₙ mit R¹ gleich Methyl, Ethyl, Butyl, Pentyl, Hexyl, Octyl, Decyl und/oder Dodecyl, R² gleich 0,5 Ca und/oder 0,5 Mg und n gleich 1, 2 oder 3, wobei bezüglich der zweiwertigen Kationen das oben Gesagte gilt. In diesen besonders bevorzugten Ausführungsformen liegen keine weiteren Anionen X^{x-} vor, d. h. in der Formel 1/(p-x^{∗}y) ist y gleich Null.

Ganz besondere bevorzugte Verbindungen der allgemeinen Formel (I) sind ausgewählt aus der Gruppe bestehend aus (NaO)(CH₃)Si(OH)₂, (NaO)(C₂H₅)Si(OH)₂, (NaO)(C₅H₁₁)Si(OH)₂, (NaO)(C₈H₁₇)Si(OH)₂, (KO)(CH₃)Si(OH)₂, (KO)(C₂H₅)Si(OH)₂, (KO)(C₅H₁₁)Si(OH)₂, (KO)(C₈H₁₇)Si(OH)₂, (NH₄O)(CH₃)Si(OH)₂, (NH₄O)(C₂H₅)Si(OH)₂, (NH₄O)(C₅H₁₁)Si(OH)₂, (NH₄O)(C₈H₁₇)Si(OH)₂, (NaO)₂(CH₃)Si(OH), (NaO)₂(C₂H₅)Si(OH), (NaO)₂(C₅H₁₁)Si(OH), (NaO)₂(C₈H₁₇)Si(OH), (KO)₂(CH₃)Si(OH), (KO)₂(C₂H₅)Si(OH), (KO)₂(C₅H₁₁)Si(OH), (KO)₂(C₈H₁₇)Si(OH), (NH₄O)₂(CH₃)Si(OH), (NH₄O)₂(C₂H₅)Si(OH), (NH₄O)₂(C₅H₁₁)Si(OH), (NH₄O)₂(C₈H₁₇)Si(OH), (NaO)₃(CH₃)Si, (NaO)₃(C₂H₅)Si, (NaO)₃(C₅H₁₁)Si, (NaO)₃(C₈H₁₇)Si, (KO)₃(CH₃)Si, (KO)₃(C₂H₅)Si, (KO)₃(C₅H₁₁)Si, (KO)₃(C₈H₁₇)Si, (NH₄O)₃(CH₃)Si, (NH₄O)₃(C₂H₅)Si, (NH₄O)₃(C₅H₁₁)Si, (NH₄O)₃(C₈H₁₇)Si, (NaO)(CH₃)₂Si(OH), (NaO)(C₂H₅)₂Si(OH), (KO)(CH₃)₂Si(OH), (KO)(C₂H₅)₂Si(OH), (NaO)₂(CH₃)₂Si, (NaO)₂(C₂H₅)₂Si, (KO)₂(CH₃)₂Si, (KO)₂(C₂H₅)₂Si, Ca⁺[(O⁻)(CH₃)Si(OH)₂]₂, Ca⁺[(O⁻)(C₂H₅)Si(OH)₂]₂, Ca⁺[(O⁻)(C₅H₁₁)Si(OH)₂]₂, Ca⁺[(O⁻)(C₈H₁₇)Si(OH)₂]₂, Ca⁺[(O⁻)(CH₃)₂Si(OH)]₂, Ca⁺[(O⁻)(C₂H₅)₂Si(OH)]₂, Ca⁺[(O)₂(CH₃)Si(OH)], Ca⁺[(O⁻)₂(C₂H₅)Si(OH)], Ca⁺[(O⁻)₂(C₅H₁₁)Si(OH)], Ca⁺[(O⁻)₂(C₈H₁₇)Si(OH)], Ca⁺[(O⁻)₂(CH₃)₂Si], Ca⁺[(O⁻)₂(C₂H₅)₂Si],

Eine erfindungsgemäß bevorzugte Klasse von Polysiliconaten der allgemeinen Formel (I) enthaltend Gruppen der allgemeinen Formel (IIa) sind Polymethylsiliconate und Polydimethylsiliconate mit Natrium, Kalium, Magnesium, Calcium oder Ammonium als Kation.

Die vorliegende Erfindung betrifft auch ein Verfahren zur Herstellung eines an der Oberfläche modifizierten Partikels wie oben definiert durch Inkontaktbringen des zu modifizierenden Metall- oder Halbmetalloxidpartikels und einer Verbindung der allgemeinen Formel (I) wie oben definiert.

Die Umsetzung der genannten Metall- oder Halbmetalloxidpartikel mit den Verbindungen der allgemeinen Formel (I) oder den Polysiloxanen der allgemeinen Formel (I) enthaltend Gruppen der allgemeinen Formel (IIa) kann nach dem Fachmann bekannten Verfahren erfolgen, beispielsweise durch Inkontaktbringen der Substrate in einem Lösungsmittel, beispielsweise Toluol oder Wasser, bei einer Temperatur von Raumtemperatur bis Siedetemperatur des Lösungsmittels. Zusätzlich erfolgt unter Umständen im gleichen oder einem separaten Schritt noch das Inkontaktbringen mit weiteren Reaktionspartnern oder -beschleunigern, beispielsweise Säuren, CO₂, usw. Nach üblicher Aufarbeitung kann das Umsetzungsprodukt aus Metall- oder Halbmetalloxidpartikel und Verbindungen der allgemeinen Formel (I) oder Polysiloxanen der allgemeinen Formel (I) enthaltend Gruppen der der allgemeinen Formel (IIa) erhalten werden.

Die Fixierung der Siliziumverbindungen auf der Metall- oder Halbmetalloxidoberfläche erfolgt dabei bevorzugt durch eine Kondensation der oberflächlichen Hydroxylgruppen des Oxids M-OH mit Silanolgruppen der Siliziumverbindung (Si-OH + M-OH → Si-O-M + H₂O). Die Silanolgruppen können schon in der Ausgangssiliziumverbindung der Formel (I) oder einer Untereinheit (IIa) enthalten sein oder erst in situ gebildet werden. Dies kann zum Beispiel durch die Hydrolyse des Siliziumethers (Si-OR + H₂O) zum Silanol (Si-OH + ROH) erfolgen. SiOR² kann hydrolysiert werden, R¹ und alle weiteren genannten Reste können nicht hydrolysiert werden.

Das erfindungsgemäße Verfahren kann beispielsweise durchgeführt werden, indem eine Reagenzlösung enthaltend die Verbindung der allgemeinen Formel (I) auf die Metalloxid- oder Halbmetalloxidpartikel gesprüht wird. Eine weitere Methode, den zu modifizierenden Metall- oder Halbmetalloxidpartikel und eine Verbindung der allgemeinen Formel (I) wie oben definiert in Kontakt zu bringen, besteht beispielsweise darin, die Metall- oder Halbmetalloxidpartikel in einer Verbindung der allgemeinen Formel (I) oder in einer Lösung einer Verbindung der allgemeinen Formel (I) in einem geeigneten Lösungsmittel zu suspendieren. Entsprechende Verfahren sind dem Fachmann an sich bekannt.

Nachdem die Verbindung der Formel (I) mit dem Metall- oder Halbmetalloxidpartikel in Kontakt gebracht wurde, kann ein weiterer Behandlungsschritt notwendig sein, um die Fixierungsreaktion zu vervollständigen. Dies kann z. B. durch Einstellen des pH, Temperaturbehandlung, Behandlung mit diversen Gasatmosphären, z. B. CO₂ oder SO₂, oder einer Kombination von derartigen Schritten erfolgen.

Die erfindungsgemäße stabile Mischung enthält neben den genannten funktionalisierten Metall- oder Halbmetalloxidpartikeln wenigstens ein Lösungsmittel, wenigstens eine oberflächenaktive Substanz oder eine Mischung davon.

Es wurde überraschenderweise gefunden, dass die erfindungsgemäßen Umsetzungsprodukte, d. h. die an der Oberfläche funktionalisierten Metalloxid- oder Halbmetalloxidpartikel, in Mischungen mit Lösungsmittel und/oder oberflächenaktiven Verbindungen besonders stabil sind, d. h. es erfolgt keine Abspaltung der oberflächlich angebundenen Siliziumverbindungen.

Das in der erfindungsgemäßen Mischung vorliegende wenigstens eine Lösungsmittel ist bevorzugt ausgewählt aus der Gruppe bestehend aus aromatischen Kohlenwasserstoffen, beispielsweise Benzol, Toluol, Xylol, Alkoholen, beispielsweise Methanol, Ethanol, Propanole, wie n-Propanol, iso-Propanol, Butanole, wie n-Butanol, iso-Butanol, tert.-Butanol, Ethern, wie Diethylether, Methyl-tert.-butyl-ether, iso-Butyl-tert.-Butylether, cyclischen Ethern, wie Tetrahydrofuran, Dioxan, Estern, cyclischen Estern, Alkanen, wie Hexan, Cycloalkanen, wie Cyclohexan, Olefinen, Cycloolefinen, Wasser und Mischungen davon. Werden erfindungsgemäß Mischungen von Lösungsmitteln eingesetzt, so werden bevorzugt Lösungsmittel eingesetzt, die vollständig miteinander mischbar sind, d. h. beim Mischen eine Phase ausbilden.

Daher betrifft die vorliegende Erfindung bevorzugt die erfindungsgemäße Mischung, wobei das wenigstens eine Lösungsmittel ausgewählt ist aus der Gruppe bestehend aus aromatischen Kohlenwasserstoffen, beispielsweise Benzol, Toluol, Xylol, Alkoholen, beispielsweise Methanol, Ethanol, Propanole, wie n-Propanol, iso-Propanol, Butanole, wie n-Butanol, iso-Butanol, tert.-Butanol, Ethern, wie Diethylether, Methyl-tert.-butyl-ether, iso-Butyl-tert.-Butylether, cyclischen Ethern, wie Tetrahydrofuran, Dioxan, Estern, cyclischen Estern, Alkanen, wie Hexan, Cycloalkanen, wie Cyclohexan, Olefinen, Cycloolefinen, Wasser und Mischungen davon.

Die erfindungsgemäße Mischung findet sich in einer bevorzugten Ausführungsform in Verfahren wieder, in denen die oberflächlich modifizierten Partikel mit besonders großen Mengen Lösungsmittel in Kontakt gebracht werden.

In der erfindungsgemäßen Mischung liegt im Allgemeinen ein Feststoffgehalt von bis zu 70 Gew.-%, bevorzugt bis zu 60 Gew.-% vor. Daraus ergibt sich, dass der Gehalt an wenigstens einem Lösungsmittel in der erfindungsgemäßen Mischung im Allgemeinen mindestens 30 Gew.-%, bevorzugt mindestens 40 Gew.-%, beträgt, d. h. im Allgemeinen 30 bis 99,9 Gew.-%, bevorzugt 40 bis 99,9 Gew.-% Lösungsmittel. Erfindungsgemäß wird unter Feststoffgehalt der Gehalt an erfindungsgemäß an der Oberfläche modifizierten Partikeln und gegebenenfalls weiteren vorhandenen Feststoffen verstanden.

Die in der erfindungsgemäßen Mischung vorliegende wenigstens eine oberflächenaktive Substanz ist bevorzugt ausgewählt aus der Gruppe bestehend aus nicht-ionischen, anionischen, kationischen oder zwitterionischen Tensiden und Mischungen davon.

Erfindungsgemäß bevorzugte Beispiele für nicht-ionische Tenside sind Fettalkoholpolyglykolether, insbesondere Fettalkohol-polyethylenglykolether.

Erfindungsgemäß bevorzugte Beispiele für anionische Tenside sind Alkylbenzolsulfonate, sekundäre Alkansulfonate, α-Olefinsulfonate, Fettalkoholsulfate oder Fettalkoholethersulfate.

Erfindungsgemäß bevorzugte Beispiele für kationische Tenside sind Stearyltrimethylammoniumsalze.

Erfindungsgemäß bevorzugte Beispiele für zwitterionische Tenside sind Sultaine, Fettsäureamidoalkylhydroxysultain oder Alkylbetaine.

Erfindungsgemäß besonders bevorzugte oberflächenaktive Substanzen sind Natrium-Alkylphenolethersulfate.

In der erfindungsgemäßen Mischung liegt die wenigstens eine oberflächenaktive Substanz im Allgemeinen in einer Menge von 0,001 bis 20 Gew.-%, bevorzugt 0,01 bis 15 Gew.-%, besonders bevorzugt 0,1 bis 10 Gew.-%, jeweils bezogen auf die gesamte Mischung, vor. Liegt erfindungsgemäß wenigstens eine oberflächenaktive Substanz vor, so wird die oben genannte Menge an wenigstens einem Lösungsmittel entsprechend angepasst.

Die an der Oberfläche funktionalisierten Metalloxid- oder Halbmetalloxidpartikel liegen In der erfindungsgemäßen Mischung im Allgemeinen in einer Menge von 0,1 bis 70 Gew.-%, bevorzugt 0,1 bis 60 Gew.-%, vor.

Liegen in der erfindungsgemäßen Mischung gegebenenfalls weitere Feststoffe vor, so wird die oben genannte Menge von an der Oberfläche funktionalisierten Metalloxid- oder Halbmetalloxidpartikel entsprechend angepasst.

In allen möglichen Ausführungsformen addieren sich die Mengen von an der Oberfläche funktionalisierten Metalloxid- oder Halbmetalloxidpartikel, wenigstens einem Lösungsmittel, gegebenenfalls vorliegenden oberflächenaktiven Substanzen und gegebenenfalls vorliegenden weiteren Feststoffen zu 100 Gew.-%.

Neben den funktionalisierten Partikeln, dem wenigstens einen Lösungsmittel und/oder der wenigstens einen oberflächenaktiven Substanz können in der erfindungsgemäßen Mischung weitere Komponenten vorliegen, beispielsweise oxidische oder metallische Feststoffe und weitere hydrophobe Komponenten. Die Summe der Mengen der in der erfindungsgemäßem Mischung vorliegenden Komponenten addieren sich in jedem Fall zu 100 Gew.-%.

In der erfindungsgemäßen Mischung ist das Massenverhältnis von Lösungsmittel zu modifiziertem Partikel im Allgemeinen größer als 500, bevorzugt 1000, besonders bevorzugt größer als 5000, ganz besonders bevorzugt größer als 10000.

Im Rahmen der vorliegenden Erfindung bedeutet der Begriff "stabile Mischung", dass die in der erfindungsgemäßen Mischung vorliegenden oberflächlich funktionalisierten Metalloxid- oder Halbmetalloxidpartikel in der Mischung nicht verändert werden, d. h. die an der Oberfläche vorliegenden Silylgruppen werden nicht von der Oberfläche der Metalloxid- oder Halbmetalloxidpartikel, beispielsweise durch Hydrolyse, gelöst, so dass sich die erfindungsgemäße Mischung als ganzes nicht oder nur geringfügig verändert. Dass eine Mischung enthaltend an der Oberfläche modifizierte Partikel stabil im Sinne der vorliegenden Erfindung ist, kann z. B. dadurch gezeigt werden, dass entsprechende Partikel, die in einer erfindungsgemäßen Mischung in Kontakt mit Lösungsmittel und/oder oberflächenaktiven Substanz stehen, chemisch und/oder physikalisch unverändert bleiben. Dies kann beispielsweise durch eine Elementaranalyse oder Bestimmung der hydrophoben Eigenschaften, beispielsweise durch Bestimmung der Schwimmfähigkeit oder des Kontaktwinkels, ermittelt werden.

Die vorliegende Erfindung betrifft auch ein Verfahren zur Behandlung von erfindungsgemäßen, an der Oberfläche modifizierten Partikeln mit mindestens einem Lösungsmittel, wobei das Massenverhältnis von Lösungsmittel zu modifiziertem Partikel größer als 500 ist.

Bezüglich der an der Oberfläche modifizierten Partikeln und der Lösungsmittel gilt für das erfindungsgemäße Verfahren das bezüglich der erfindungsgemäßen Mischung Gesagte.

In dem erfindungsgemäßen Verfahren ist das Massenverhältnis von an der Oberfläche modifiziertem Partikel und dem mindestens einen Lösungsmittel dabei im Allgemeinen größer als 500, bevorzugt größer als 1000, besonders bevorzugt größer als 5000, ganz besonders bevorzugt größer als 10000.

Bei diesem erfindungsgemäßen Verfahren werden die erfindungsgemäßen an der Oberfläche modifizierten Partikel mit einer relativ großen Menge an Lösungsmittel in Kontakt gebracht, d. h. behandelt. Entsprechende erfindungsgemäße Systeme, in denen dieses Behandeln erfolgen kann, sind beispielsweise strömende Systeme, in denen die erfindungsgemäßen an der Oberfläche modifizierten Partikel in beispielsweise kontinuierlichen Verfahren mit weiteren Stoffen, Partikeln, Materialien etc. in Kontakt gebracht werden, beispielsweise kontinuierliche Verfahren zur Agglomeration mit weiteren Stoffen, Partikeln, Materialien etc. in Lösung oder Dispersion. Das erfindungsgemäße Verfahren betrifft auch die Deagglomeration von Agglomeraten aus den erfindungsgemäß an der Oberfläche modifizierten Partikeln und weiteren Stoffen, Partikeln oder Materialien, oder von Agglomeraten der an der Oberfläche modifizierten Partikeln mit sich selbst, beispielsweise ebenfalls in strömenden Systemen.

Die vorliegende Erfindung betrifft auch die Verwendung von erfindungsgemäßen, an der Oberfläche modifizierten Partikeln in Systemen, in denen die modifizierten Partikel mit mindestens einem Lösungsmittel in Kontakt gebracht werden, wobei das Massenverhältnis von Lösungsmittel zu modifiziertem Partikel größer als 500 ist.

Bezüglich der an der Oberfläche modifizierten Partikeln und der Lösungsmittel gilt das bezüglich der erfindungsgemäßen Mischung Gesagte.

Das Massenverhältnis von an der Oberfläche modifiziertem Partikel und dem mindestens einen Lösungsmittel ist dabei im Allgemeinen größer als 500, bevorzugt größer als 1000, besonders bevorzugt größer als 5000, ganz besonders bevorzugt größer als 10000.

Bei dieser erfindungsgemäßen Verwendung werden die erfindungsgemäßen an der Oberfläche modifizierten Partikel mit einer relativ großen Menge an Lösungsmittel in Kontakt gebracht. Entsprechende erfindungsgemäße Systeme, in denen dieses Inkontaktbringen erfolgen kann, sind beispielsweise strömende Systeme, in denen die erfindungsgemäßen an der Oberfläche modifizierten Partikel in beispielsweise kontinuierlichen Verfahren mit weiteren Stoffen, Partikeln, Materialien etc. in Kontakt gebracht werden, beispielsweise kontinuierliche Verfahren zur Agglomeration mit weiteren Stoffen, Partikeln, Materialien etc. in Lösung oder Dispersion. Die erfindungsgemäße Verwendung betrifft auch die Deagglomeration von Agglomeraten aus den erfindungsgemäß an der Oberfläche modifizierten Partikeln und weiteren Stoffen, Partikeln oder Materialien, oder von Agglomeraten der an der Oberfläche modifizierten Partikeln mit sich selbst, beispielsweise ebenfalls in strömenden Systemen.

Die vorliegende Erfindung betrifft auch die Verwendung von erfindungsgemäßen, an der Oberfläche modifizierten Partikeln, insbesondere Magnetpartikeln, in Agglomerations-Deagglomerations-Zyklen.

Auch bei dieser Verwendung gilt für die an der Oberfläche modifizierten Partikeln und die Lösungsmittel das bezüglich der erfindungsgemäßen Mischung Gesagte.

Unter einem Agglomerations-Deagglomerations-Zyklus wird erfindungsgemäß ein Verfahren verstanden, bei dem die erfindungsgemäßen, an der Oberfläche funktionalisierten Partikel, insbesondere Magnetpartikel, mit sich selbst oder anderen Partikeln, Stoffen, Materialien etc. in Lösung oder Dispersion in Kontakt gebracht werden und aufgrund hydrophober Wechselwirkung, ionischer, van-der-Waals-Wechselwirkungen und/oder anderer anziehender Kräfte agglomerieren. Diese Agglomerate werden dann im weiteren Verfahren bearbeitet, beispielsweise von anderen Komponenten und/oder der Lösung oder Dispersion abgetrennt. Nach diesem weiteren Bearbeiten werden die Agglomerate dann wieder getrennt, d. h. deagglomeriert, so dass die an der Oberfläche funktionalisierten Partikel und die anderen Partikel, Stoffe, Materialien etc. wieder jeweils einzeln vorliegen (Deagglomeration). Beispiele für erfindungsgemäß bevorzugte Agglomerations-Deagglomerations-Zyklen sind chemische, physikalische oder biologische Test- oder Trennverfahren, die Reinigung von kontaminiertem, beispielsweise Schwermetall-belastetem, Erdreich, eine Wasserreinigung, Recycling von Elektroschrott oder eine Schwerkrafttrennung.

In chemischen, physikalischen oder biologischen Test- oder Trennverfahren werden beispielsweise speziell modifiziere magnetische Nanopartikel eingesetzt, die auf ihrer Oberfläche Ankergruppen für ein spezielles Antigen oder Virus aufweisen, z. B. Borrelia, HIV, Hepatitis. Diese speziellen Ankergruppen entsprechen dabei insbesondere der oben genanten Gruppe R¹, die abhängig von der jeweiligen Trenn- oder Testaufgabe entsprechend ausgebildet wird, beispielsweise durch Vorliegen der oben genannten funktionellen Gruppen. Durch eine Anbindung dieser Antigene / Viren auf der modifizierten Partikeloberfläche (Agglomeration) können diese Bestandteile über eine magnetische Trennung aus einer Lösung abgetrennt und entsprechend nachgewiesen werden. Das Recycling der funktionalisierten Magnetpartikel erfolgt dann durch Tenside, die die elektrostatische, adhäsive oder Van-der-Waals-Wechselwirkung zwischen funktionalisiertem Magnetpartikel und Antigen/Viren wieder lösen (Deagglomeration). Auf diese Weise können die funktionalisierten Magnetitpartikel erneut eingesetzt werden.

Bei der Wasserreinigung können die erfindungsgemäßen modifizierten Partikel, insbesondere Magnetpartikel, verwendet werden. Hierbei kann man z. B. funktionalisierte Magnetitpartikel einsetzen, die organische Bestandteile, Schwebstoffe oder Fetttröpfchen aus dem Wasser entfernen, in dem eine hydrophobe Agglomeration zwischen dem funktionalisierten Magnetitpartikel und der hydrophoben Verunreinigung stattfindet. Diese hydrophoben Agglomerate können durch eine Magnettrennung abgetrennt werden. Um die Wasserreinigung wirtschaftlich zu gestalten, ist es sinnvoll, die hydrophoben Magnetitpartikel wieder von der Verunreinigung zu "entladen" und erneut in den Kreislauf zurückzuführen. Diese "Entladung" kann wieder durch Deagglomeration mit einer speziellen oberflächenaktiven Substanz (Tensid) und/oder durch ein spezielles Lösungsmittel bzw. Lösungsmittelgemisch erfolgen.

Recycling von Elektroschrott kann beispielsweise durch die magnetische Rückgewinnung von Wertstoffen (Ir, Pt, Ru) aus Elektroschrott erfolgen, wobei wieder bevorzugt modifizierte Magnetitpartikel eingesetzt werden können, die - nach einer Hydrophobierung der zu trennenden Wertstoffe - mit diesen agglomerieren und abgetrennt werden können. Nach erfolgter Abtrennung werden die vorliegenden Agglomerate wieder deagglomeriert, so dass die modifizierten Magnetpartikel wieder verwendet werden können.

Ein weiteres Beispiel ist die Schwerkrafttrennung, z. B. über dem Fachmann bekannte Zyklone. Hierdurch können dichtere Bestandeile von weniger dichten über eine Schwerkrafttrennung abgetrennt werden. Falls sich die einzelnen Komponenten nur geringfügig in ihrer Dichte unterscheiden, z. B. Pt-dotierter Hämatit und undotierter Hämatit, kann die Dichte der abzutrennenden Komponente durch Agglomeration mit einer weiteren Komponente erhöht werden. Als modifizierter Partikel wird hierbei beispielsweise die Pt-dotierte Hämatitkomponente erfindungsgemäß hydrophobiert, so dass nach Zugabe von hydrophobiertem Bariumsulfat ein Agglomerat aus dem modifiziertem Hämatit und Bariumsulfat entsteht, welches zu dem undotierten Hämatit einen größeren Dichteunterschied aufweist. Nach erfolgter Abtrennung kann das Agglomerat wieder deagglomeriert werden.

Die vorliegende Erfindung betrifft daher auch bevorzugt die erfindungsgemäße Verwendung, wobei der Agglomerations-Deagglomerations-Zyklus ein chemisches, physikalisches oder biologisches Test- oder Trennverfahren, eine Wasserreinigung, die Reinigung von kontaminiertem, beispielsweise Schwermetall-belastetem Erdreich, Recycling von Elektroschrott oder eine Schwerkrafttrennung ist.

Ein erfindungsgemäßer Vorteil ist, dass die erfindungsgemäß oberflächlich modifizierten Partikel unter den bei der Agglomeration und vor allem der Deagglomeration vorliegenden Bedingungen stabil sind, und daher bevorzugt wieder verwertet werden können.

### Beispiele

### Beispiel 1: Allgemeine Verfahren

### Beispiel 1.1: Darstellung der verwendeten Alkali-Alkylsilikonaten

Die Darstellung der Alkali-Alkylsilikonate erfolgt nach der Vorschrift in R. Murugavel et al., Solid State Sciences 2001, 3(1-2), 169-182. Alternativ kann auch gemäß den Beispielen in GB675188A verfahren werden.

Beispielsweise wird zur *ⁿ*OctSi(ONa)₃-Darstellung innerhalb von 30 min 1 mol *ⁿ*OctSi(OMe)₃ der Fa. ABCR (97%-ig) in eine Lösung aus 10 mol NaOH in 400 g Wasser eingetragen. Anschließend wird die Reaktion unter Rückfluss innerhalb von 4 h vervollständigt. Durch Abdestillation des Lösungsmittels wird eine konzentrierte Lösung oder bei vollständiger Trocknung das Produkt als Feststoff erhalten.

### Beispiel 1.2: mehrmalige Behandlung des Feststoffs mit Tensidlösung

10 g des zu untersuchenden Feststoffs werden in 1 L einer 0,2 gew.-%-igen Lösung von Lutensit A-ES der BASF SE (Mischung von Natrium-Alkylphenolethersulfaten) in Wasser bei Raumtemperatur 2 h gerührt. Anschließend wird der Feststoff abfiltriert und mit 1 L Wasser, 100 mL Ethanol und 100 mL Aceton gewaschen. Der Filterkuchen wird bei 120 °C 4 h im Vakuum getrocknet. Anschließend werden Proben für die Analytik entnommen. Für die erneuten Waschungen wird das restliche Produkt eingesetzt.

### Beispiel 1.3: Schnelltest Schwimmfähigkeit auf Wasser

In einem 5 mL Probengläschen werden 3 mL Wasser eingefüllt. Mit dem Spatel wird anschließend der zu untersuchende Feststoff vorsichtig auf der Wasseroberfläche abgelegt. Anschließend wird beobachtet, ob der Feststoff untergeht oder dauerhaft schwimmt. Bei schwimmenden Feststoffen wird das verschlossene Gefäß 10 s geschüttelt. Anschließend wird beobachtet, ob der Feststoff wieder aufschwimmt oder unter Wasser bleibt.

### Beispiel 1.4: Kontaktwinkelmessung

### Kontaktwinkelmessung an Pulvern:

Kontaktwinkel werden mit einem Standard-Instrument (Dropshape Analysis Instrument, Fa. Kruss DAS 10) gemessen. Ein Schattenbild des Tropfens wird durch eine CCD-Kamera eingefangen und die Tropfenform wird durch computergestützte Bildanalyse ermittelt. Die Messungen werden, wenn nicht anders angegeben, wie in DIN 5560-2 beschrieben, durchgeführt.

### a) Herstellung einer homogenen Pulverschicht

Das Magnetit-Pulver wird als eine ungefähr 1 mm dicke Schicht mit einer 100 µm dicken BASF-Acronal-V215-Kleber-Dispersion auf eine PET-Folie aufgebracht. Unter Verwendung eines Spatels wird das Pulver in den Kleber gepresst und nicht anhaftendes, überschüssiges Material wird durch Schütteln entfernt. Schließlich wird verbleibendes, loses Material durch Blasen mit gereinigtem Stickstoff unter Druck über die Probe entfernt. Dieses Verfahren ergibt eine saubere, homogene Pulveroberfläche über die gesamte Fläche des Substrats von 75 mm x 25 mm.

Pulveroberflächen zeigen normalerweise eine gewisse Rauheit und Kontaktwinkel bzw. deren Messung sind bezüglich dieser Rauheit empfindlich. Daher kann ein direkter Vergleich der Hydrophobizität nur an Pulvern mit gleicher Partikelgrößenverteilung und Partikelform durchgeführt werden. Sorgfältige Oberflächenanalysen unter Verwendung von ToF-SIMS haben gezeigt, dass die Oberfläche der durch dieses Verfahren hergestellten Pulverschicht keine Spuren von Klebstoff aufweist und für das Pulver repräsentativ ist.

### b) Dynamische, fortschreitende Kontaktwinkel-Messung

Ein Milliliter Wasser wird als Tropfen auf der Oberfläche platziert, und es werden kontinuierlich 2 µl/min Wasser zugeführt. Kontinuierlich werden so 20 µl Flüssigkeitsvolumen zugeführt. Ausgehend von einem minimalen Volumen von ungefähr 3 µl werden Kontaktwinkel gemessen, während die Spritzennadel, welche zur Dosierung verwendet wird, im Tropfen verbleibt. Konturmessungen werden mit einer Rate von ungefähr 0,5 Hz gemessen, ausgewertet wird durch eine Tangentenmethode, um den Kontaktwinkel zu bestimmen, der sich direkt an der DreiPhasen-Kontaktlinie befindet. Diese Kontaktwinkel werden über die Zeit gemittelt, für jede Probe werden fünf fortschreitende Tropfen an verschiedenen Positionen gemessen und der durchschnittliche Wert wird mit einer Standardabweichung ermittelt.

### Beispiel 1.5: Rezyklierungsversuche

Es wird ein Versuch unternommen, nach dem jeweiligen Beispiel hydrophobierten Magnetit als wieder verwertbaren Carrier für die Reinigung von (schwermetall)-belastetem Erdreich zu verwenden. Hierzu werden 3 g Magnetit in ein System eindispergiert, welches 100 g einer Sandmischung (Feststoffgehalt: 1 Gew.-%) enthält. Diese Sandmischung enthält zu 99 Gew.-% anorganische silikatische Bestandteile (z. B. Feldspäte, Glimmer, Katzengold) und zu 1 Gew.-% eine spezielle hydrophobierte anorganische As-haltige Verunreinigung (Enargite). Die Hydrophobierung dieser anorganischen Verunreinigung erfolgt mit Butylxanthat. Nach heftigem Durchmengen des hydrophobierten Magnetits mit dieser Sandmischung wird die Arsenkomponente über hydrophobe Flokkulation mit dem Magnetit abgetrennt. Die hydrophoben Bestandteile werden gesammelt und mit einer 0,1 gew.-%igen Lösung eines Tensids (Lutensit A-ES der BASF SE) behandelt. In einem nächsten magnetischen Trennschritt werden die magnetischen Bestandteile von den unmagnetischen As-haltigen Verunreinigungen abgetrennt. Der hydrophobe Magnetit wird mit einem 1:1-Gemisch aus Wasser und EtOH gewaschen, abfiltriert und erneut mit einer neu hergestellten Sandmischung vermengt. Der Prozess wird insgesamt zehnmal wiederholt.

### Beispiel 2: Herstellung von hydrophobiertem Magnetit

### Beispiel 2.1: mit ⁿOctSi(OK)₃ silanisiertes Magnetpigment 345 der BASF SE (erfindungsgemäß)

Synthese: Zu einer Lösung aus 370 mg *ⁿ*OctSi(OK)₃ in 30 mL Wasser werden 10 g Magnetpigment 345 (Magnetit Fe^{II}(Fe^{III})₂O₄) der BASF SE gegeben. Die Lösung wird 30 min bei Raumtemperatur gerührt. Das Produkt wird bei bei 40 °C im Vakuum getrocknet. Anschließend erfolgt eine Lagerung bei 40 °C an Luft für 7 d. Der erhaltene Feststoff wird mit Wasser gewaschen, bis keine pH-Änderung des Waschwassers mehr auftritt. Anschließend wird bei 40 °C über Nacht an Luft getrocknet. Das getrocknete Produkt wird nach Vorzerkleinerung durch ein Analysensieb (400 µm) gestrichen und somit deagglomeriert und homogenisiert.

Analytik:
Schwimmtest: frischer und zehnfach gewaschener Feststoff schwimmen gleichermaßen auf Wasser (auch nach Unterschütteln);
Kontaktwinkel: frisch 146°, zehnfach gewaschen 139°;
Rezyklierungsversuch: Detektiert man die Ausbeute der As-Komponente, so sinkt bei der Verwendung des mit *ⁿ*OctSi(OK)₃ silanisierten Magnetpigments 345 der BASF SE die Ausbeute von 92% im ersten Zyklus nur auf 90% im zehnten Zyklus.

### Beispiel 2.2: mit ⁿBuSi(OH)₂(ONa) silanisiertes Magnetpigment 345 der BASF SE (erfindungsgemäß)

Synthese: Die Synthese erfolgt nach dem in Beispiel 2.1 beschriebenen Schema. Allerdings werden 350 mg *ⁿ*BuSi(OH)₂(ONa) verwendet und es wird die Lagerung bei 120 °C in einer CO₂-Atmosphäre durchgeführt.

Analytik:
Schwimmtest: frischer und zehnfach gewaschener Feststoff schwimmen gleichermaßen auf Wasser (auch nach Unterschütteln);
Kontaktwinkel: frisch 154°, zehnfach gewaschen 152°;
Rezyklierungsversuch: Detektiert man die Ausbeute der As-Komponente, so sinkt bei der Verwendung des mit *ⁿ*BuSi(OH)₂(ONa) silanisierten Magnetpigments 345 der BASF SE die Ausbeute von 95% im ersten Zyklus nur auf 91% im zehnten Zyklus.

### Beispiel 2.3: mit (Ca²⁺)[ⁿPr(Me)Si(OH)(O-)]₂ silanisiertes Magnetpigment 345 der BASF SE (erfindungsgemäß)

Synthese: Die Synthese erfolgt nach dem in Beispiel 2.1 beschriebenen Schema. Allerdings werden 340 mg (Ca²⁺)[*ⁿ*Pr(Me)Si(OH)(O⁻)]₂ als Silanisierungsreagenz eingesetzt.

Analytik:
Schwimmtest: frischer und zehnfach gewaschener Feststoff schwimmen gleichermaßen auf Wasser (auch nach Unterschütteln);
Kontaktwinkel: frisch 142°, zehnfach gewaschen 136°;
Rezyklierungsversuch: Detektiert man die Ausbeute der As-Komponente, so sinkt bei der Verwendung des mit (Ca²⁺)[*ⁿ*Pr(Me)Si(OH)(O⁻)]₂ silanisierten Magnetpigments 345 der BASF SE die Ausbeute von 89% im ersten Zyklus nur auf 87% im zehnten Zyklus.

### Beispiel 3: Vergleichsbeispiele

### Vergleichsbeispiel 3.1: kommerzieller, hydrophober Magnetit Bayoxide E8707 H der Fa. Lanxess (nicht erfindungsgemäß)

Analytik:
Schwimmtest: frischer Feststoff schwimmt auch nach Unterschütteln auf Wasser, bereits zweifach gewaschener Feststoff schwimmt nicht mehr;
Kontaktwinkel: frisch 158°, zehnfach gewaschen 116°
Rezyklierung: Vergleichende Versuche mit einem bereits hydrophoben Magnetit der Firma Lanxess (Produkt: Bayoxide E8707 H) ergeben bereits nach dem vierten Zyklus einen dramatischen Ausbeuteverlust von über 40%. Die Versuche mit diesem Produkt werden danach abgebrochen.

### Vergleichsbeispiel 3.2: mit ⁿOctMe₂SiCl silanisiertes Magnetpigment 345 der BASF SE (nicht erfindungsgemäß)

Synthese: Unter Schutzgasatmosphäre werden 10 g Magnetpigment 345 der BASF SE in 20 mL Toluol suspendiert. Die Suspension wird auf 70 °C aufgeheizt, bevor 0,3 g *ⁿ*OctMe₂SiCl (97 %-ig, Fa. ABCR) zugegeben werden. Die Reaktionsmischung wird anschließend unter Rühren 4 h bei 70 °C gehalten. Anschließend wird der Feststoff abfiltriert, erst mit 50 mL Toluol, dann 50 mL Methanol und abschließend Wasser bis zur Chloridfreiheit der Waschlösung gewaschen. Das Produkt wird bei 120 °C für 4 h im Vakuum getrocknet. Das getrocknete Produkt wird nach Vorzerkleinerung durch ein Analysensieb (400 µm) gestrichen und somit deagglomeriert und homogenisiert.

Analytik:
Schwimmtest: Feststoff schwimmt auf Wasser (auch nach Unterschütteln), bereits einfach gewaschener Feststoff schwimmt nicht mehr auf Wasser;
Kontaktwinkel: frisch 148°, einfach gewaschen 120°, zehnfach gewaschen 98°

Vergleichsbeispiel 3.3: mit ⁿBuMe₂SiCl silanisiertes Magnetpigment 345 der BASF SE (nicht erfindungsgemäß)

Synthese: Die Synthese erfolgt nach dem in Beispiel 2.1 beschriebenen Schema. Allerdings werden 0,3 g *ⁿ*BuMe₂SiCl (97 %-ig der Firma ABCR) als Silanisierungsreagenz eingesetzt.

Analytik:
Schwimmtest: Feststoff schwimmt auf Wasser (nicht nach Unterschütteln), bereits einfach gewaschener Feststoff schwimmt nicht mehr auf Wasser;
Kontaktwinkel: frisch 103°, zehnfach gewaschen 89°

### Vergleichsbeispiel 3.4: mit Octylphosphonsäure hydrophobiertes Magnetpigment 345 der BASF SE (nicht erfindungsgemäß)

Synthese: In einer Apparatur, die aus einem 12 L Kunststoffeimer mit Ausguss als Rührkessel und einem Metallrührer besteht, werden 8,0 kg Wasser vorgelegt. Anschließend werden 2 kg Magnetpigment 345 der BASF SE zudosiert und die Rührgeschwindigkeit des Metallrührers so gewählt, dass das Pigment nicht sedimentiert und ebenfalls keine Luft eingezogen wird (es entsteht keine Schaumkrone). Anschließend werden 12,5 g *n*-Octylphosphonsäure (OPS, 80 %-ig) der Fa. Albright & Wilson in einer Portion zugegeben und alle Einsatzstoffe für 1,5 h an Luft bei Raumtemperatur vermengt. Nach beendeter Rührzeit wird die Suspension auf eine Porzellannutsche (d = 24 cm mit einem Papierfilter MN 85/90 der Fa. Macherey-Nagel) gegeben. Entstandene Risse im Nutschkuchen werden zur Verbesserung der Waschwirkung zugestrichen. Über Nacht wird im Umlufttrockenschrank bei 110 °C getrocknet. Das getrocknete Produkt wird nach Vorzerkleinerung durch ein Analysensieb (400 µm) gestrichen und somit deagglomeriert und homogenisiert.

Analytik:
Elementaranalyse: im Endprodukt 0,06 % P;
Rezyklierungsversuch: Bereits nach dem dritten Zyklus wird nur noch eine mangelhafte Ausbeute der As-haltigen Verunreinigung von unter 50% detektiert. Die Versuche werden anschließend abgebrochen.

## Patentansprüche

1. Stabile Mischung enthaltend an der Oberfläche modifizierte Partikel, welche erhalten werden durch Umsetzung von Metalloxidpartikeln, wobei das Metalloxid ein magnetischen Eisenoxidpartikel ist, mit wenigstens einer Verbindung der allgemeinen Formel (I)
R¹ₙ-Si(OR²)₄₋ₙ (I)
worin R¹, R² und n die folgenden Bedeutungen haben:
R¹ unabhängig voneinander Wasserstoff, lineares oder verzweigtes, gegebenenfalls funktionalisiertes C₁-C₃₀-Alkyl, lineares oder verzweigtes, gegebenenfalls funktionalisiertes C₂-C₃₀-Alkenyl, lineares oder verzweigtes, gegebenenfalls funktionalisiertes C₂-C₃₀-Alkinyl, gegebenenfalls funktionalisiertes C₃-C₂₀-Cycloalkyl, gegebenenfalls funktionalisiertes C₃-C₂₀-Cycloalkenyl, gegebenenfalls funktionalisiertes C₁-C₂₀-Heteroalkyl, gegebenenfalls funktionalisiertes C₅-C₂₂-Aryl, gegebenenfalls funktionalisiertes C₆-C₂₃-Alkylaryl, gegebenenfalls funktionalisiertes C₆-C₂₃-Arylalkyl, gegebenenfalls funktionalisiertes C₅-C₂₂-Heterorayl,
R² unabhängig voneinander Wasserstoff, lineares oder verzweigtes, gegebenenfalls funktionalisiertes C₁-C₃₀-Alkyl, lineares oder verzweigtes, gegebenenfalls funktionalisiertes C₂-C₃₀-Alkenyl, lineares oder verzweigtes, gegebenenfalls funktionalisiertes C₂-C₃₀-Alkinyl, gegebenenfalls funktionalisiertes C₃-C₂₀-Cycloalkyl, gegebenenfalls funktionalisiertes C₃-C₂₀-Cycloalkenyl, gegebenenfalls funktionalisiertes C₁-C₂₀-Heteroalkyl, gegebenenfalls funktionalisiertes C₅-C₂₂-Aryl, gegebenenfalls funktionalisiertes C₆-C₂₃-Alkylaryl, gegebenenfalls funktionalisiertes C₆-C₂₃-Arylalkyl, gegebenenfalls funktionalisiertes C₅-C₂₂-Heterorayl,
NR¹₄⁺, wobei R¹ unabhängig voneinander die oben genannten Bedeutungen haben kann,
Gruppe der allgemeinen Formel 1/(p-x^{∗}y) M^{p+}X^{x-}_{y}, wobei M Metallatom ausgewählt aus der Gruppe bestehend aus Metallen der Haupt- und Nebengruppen des Periodensystems der Elemente, X ein Anion, p Oxidationszahl des Metallatoms M, x eine ganze Zahl aus 1, 2 oder 3 und y eine ganze Zahl aus 0, 1 oder 2 bedeuten, und/oder
Gruppe der allgemeinen Formel (IIa)
-SiR¹ₘ(OR²)₃₋ₘ (IIa),
wobei R¹ und R² unabhängig voneinander die oben genannten Bedeutungen haben und m unabhängig voneinander 0, 1, 2 oder 3 bedeuten kann,
n 1, 2 oder 3,
und wenigstens ein Lösungsmittel, wenigstens eine oberflächenaktive Substanz oder eine Mischung davon, **dadurch gekennzeichnet, dass** in der Verbindung der allgemeinen Formel (I) oder in der Gruppe der allgemeinen Formel (IIa) mindestens ein Rest R²NR¹₄⁺ oder eine Gruppe der allgemeinen Formel 1/(p-x^{∗}y) M^{p+}X^{x-}_{y} mit den oben genannten Bedeutungen für R¹, p, x, y, M und X ist.

2. Mischung nach Anspruch 1, **dadurch gekennzeichnet, dass** M ausgewählt ist aus der Gruppe 1, 2 oder 13 des Periodensystems der Elemente (IUPAC Nomenklatur).

3. Mischung nach Anspruch 1 oder 2, **dadurch gekennzeichnet, dass** das Massenverhältnis von Lösungsmittel zu modifiziertem Partikel größer als 500 ist.

4. Mischung nach einem der Ansprüche 1 bis 3, **dadurch gekennzeichnet, dass** in der Verbindung der allgemeinen Formel (I) n 1 oder 2, bevorzugt 1, ist.

5. Mischung nach einem der Ansprüche 1 bis 4, **dadurch gekennzeichnet, dass** in der Verbindung der allgemeinen Formel (I) oder in der Gruppe der allgemeinen Formel (IIa) mindestens ein R² unabhängig voneinander Methyl oder Ethyl ist.

6. Mischung nach einem der Ansprüche 1 bis 5, **dadurch gekennzeichnet, dass** in der Verbindung der allgemeinen Formel (I) oder in der Gruppe der allgemeinen Formel (IIa) mindestens ein R² unabhängig voneinander eine Gruppe der allgemeinen Formel 1/(p-x^{∗}y) M^{p+}X^{x-}_{y} mit p gleich 1, y gleich 0 und M gleich Na und/oder K ist.

7. Mischung nach einem der Ansprüche 1 bis 6, **dadurch gekennzeichnet, dass** das wenigstens eine Lösungsmittel ausgewählt ist aus der Gruppe bestehend aus aromatischen Kohlenwasserstoffen, Alkoholen, Ethern, cyclischen Ethern, Estern, cyclischen Estern, Alkanen, Cycloalkanen, Olefinen, Cycloolefinen, Wasser und Mischungen davon.

8. Mischung nach einem der Ansprüche 1 bis 7, **dadurch gekennzeichnet, dass** die wenigstens eine oberflächenaktive Substanz ausgewählt ist aus der Gruppe bestehend aus nicht-ionischen, anionischen, kationischen oder zwitterionischen Tensiden und Mischungen davon.

9. Mischung nach einem der Ansprüche 1 bis 8 **dadurch gekennzeichnet, dass** das magnetische Eisenoxid ausgewählt wird aus der Gruppe bestehend aus Magnetit, Maghemit, Hämatit, kubischen Ferriten der allgemeinen Formel (III)
M²⁺ₓFe²⁺₁₋ₓFe³⁺₂O₄ (III)
mit
M ausgewählt aus Co, Ni, Mn, Zn und Mischungen davon und
x ≤ 1,
hexagonalen Ferriten, und Kombinationen davon, und vorzugsweise Magnetit ist.

10. Mischung nach einem der Ansprüche 1 bis 9, **dadurch gekennzeichnet, dass** die Partikel eine Teilchengröße von 50 nm bis 500 µm, bevorzugt 200 nm bis 100 µm, besonders bevorzugt 500 nm bis 10 µm, aufweisen.

11. Verfahren zur Herstellung eines an der Oberfläche modifizierten Partikels wie in Anspruch 1 definiert durch Inkontaktbringen des zu modifizierenden Metalloxidpartikels, wobei das Metalloxid ein magnetisches Eisenoxid ist, und einer Verbindung der allgemeinen Formel (I) wie in Anspruch 1 definiert.

12. Verfahren zur Behandlung von an der Oberfläche modifizierten Partikel wie in Anspruch 1 definiert mit mindestens einem Lösungsmittel, **dadurch gekennzeichnet, dass** das Massenverhältnis von Lösungsmittel zu modifiziertem Partikel größer als 500 ist.

13. Verwendung von an der Oberfläche modifizierten Partikeln wie in Anspruch 1 definiert in Systemen, in denen die modifizierten Partikel mit mindestens einem Lösungsmittel in Kontakt gebracht werden, **dadurch gekennzeichnet, dass** das Massenverhältnis von Lösungsmittel zu modifiziertem Partikel größer als 500 ist.

14. Verwendung von an der Oberfläche modifizierten Partikeln wie in Anspruch 1 definiert in Agglomerations-Deagglomerations-Zyklen.

15. Verwendung nach Anspruch 14, **dadurch gekennzeichnet, dass** der Agglomerations-Deagglomerations-Zyklus ein chemisches, physikalisches oder biologisches Test- oder Trennverfahren, die Reinigung von kontaminiertem Erdreich, eine Wasserreinigung, Recycling von Elektroschrott oder eine Schwerkrafttrennung ist.

## Claims

1. A stable mixture comprising surface-modified particles which are obtained by reacting metal oxide particles, the metal oxide being a magnetic iron oxide particle, with at least one compound of the general formula (I)
R¹ₙ-Si(OR²)₄₋ₙ (I)
in which R¹, R² and n have the following meanings:
R¹ are each independently hydrogen, linear or branched, optionally functionalized C₁-C₃₀ alkyl, linear or branched, optionally functionalized C₂-C₃₀ alkenyl, linear or branched, optionally functionalized C₂-C₃₀ alkynyl, optionally functionalized C₃-C₂₀ cycloalkyl, optionally functionalized C₃-C₂₀ cycloalkenyl, optionally functionalized C₁-C₂₀ heteroalkyl, optionally functionalized C₅-C₂₂ aryl, optionally functionalized C₆-C₂₃ alkylaryl, optionally functionalized C₆-C₂₃ arylalkyl, optionally functionalized C₅-C₂₂ hetaryl,
R² are each independently hydrogen, linear or branched, optionally functionalized C₁-C₃₀ alkyl, linear or branched, optionally functionalized C₂-C₃₀ alkenyl, linear or branched, optionally functionalized C₂-C₃₀ alkynyl, optionally functionalized C₃-C₂₀ cycloalkyl, optionally functionalized C₃-C₂₀ cycloalkenyl, optionally functionalized C₁-C₂₀ heteroalkyl, optionally functionalized C₅-C₂₂ aryl, optionally functionalized C₆-C₂₃ alkylaryl, optionally functionalized C₆-C₂₃ arylalkyl, optionally functionalized C₅-C₂₂ hetaryl,
NR¹₄⁺, where R¹ can each independently have the meanings given above,
group of the general formula 1/(p-x^{∗}y) M^{p+}X^{x-}_{y}, where M is a metal atom selected from the group consisting of metals of the main and transition groups of the Periodic Table of the Elements, X is an anion, p is the oxidation number of the metal atom M, x is an integer from 1, 2 or 3, and y is an integer from 0, 1 or 2, and/or
group of the general formula (IIa)
-SiR¹ₘ(OR²)₃₋ₘ (IIa),
where R¹ and R² each independently have the meanings given above and m can each independently be 0, 1, 2 or 3,
n 1, 2 or 3,
and comprising at least one solvent, at least one surface-active substance or a mixture thereof, wherein in the compound of the general formula (I) or in the group of the general formula (IIa) at least one radical R² is NR¹₄⁺ or a group of the general formula 1/(p-x^{∗}y) M^{p+}X^{x-}_{y}, with the meanings given above for R¹, p, x, y, M and X.

2. The mixture according to claim 1, wherein M is selected from Group 1, 2 or 13 of the Periodic Table of the Elements (IUPAC nomenclature).

3. The mixture according to claim 1 or 2, wherein the mass ratio of solvent to modified particle is greater than 500.

4. The mixture according to any of claims 1 to 3, wherein in the compound of the general formula (I) n is 1 or 2, preferably 1.

5. The mixture according to any of claims 1 to 4, wherein in the compound of the general formula (I) or in the group of the general formula (IIa) at least one R² is independently methyl or ethyl.

6. The mixture according to any of claims 1 to 5, wherein in the compound of the general formula (I) or in the group of the general formula (IIa) at least one R² is independently a group of the general formula 1/(p-x^{∗}y) M^{p+}X^{x-}_{y}, where p is equal to 1, y is equal to 0 and M is equal to Na and/or K.

7. The mixture according to any of claims 1 to 6, wherein the at least one solvent is selected from the group consisting of aromatic hydrocarbons, alcohols, ethers, cyclic ethers, esters, cyclic esters, alkanes, cycloalkanes, olefins, cycloolefins, water and mixtures thereof.

8. The mixture according to any of claims 1 to 7, wherein the at least one surface-active substance is selected from the group consisting of nonionic, anionic, cationic or zwitterionic surfactants and mixtures thereof.

9. The mixture according to any of claims 1 to 8, wherein the magnetic iron oxide is selected from the group consisting of magnetite, maghemite, hematite, cubic ferrites of the general formula (III)
M²⁺ₓFe²⁺₁₋ₓFe³⁺₂O₄ (III)
where
M is selected from Co, Ni, Mn, Zn and mixtures thereof and
x ≤ 1,
hexagonal ferrites, and combinations thereof, and is preferably magnetite.

10. The mixture according to any of claims 1 to 9, wherein the particles have a particle size of 50 nm to 500 µm, preferably 200 nm to 100 µm, particularly preferably 500 nm to 10 µm.

11. A process for producing a surface-modified particle as defined in claim 1 by bringing the metal oxide particle to be modified, the metal oxide being a magnetic iron oxide, into contact with a compound of the general formula (I) as defined in claim 1.

12. A process for treating surface-modified particles as defined in claim 1 with at least one solvent, wherein the mass ratio of solvent to modified particle is greater than 500.

13. The use of surface-modified particles as defined in claim 1 in systems in which the modified particles are brought into contact with at least one solvent, wherein the mass ratio of solvent to modified particle is greater than 500.

14. The use of surface-modified particles as defined in claim 1 in agglomeration-deagglomeration cycles.

15. The use according to claim 14, wherein the agglomeration-deagglomeration cycle is a chemical, physical or biological testing method or separation process, purification of contaminated earth, water purification, recycling of electrical/electronic scrap or gravity separation.

## Revendications

1. Mélange stable contenant des particules modifiées en surface, qui sont obtenues par transformation de particules d'oxyde métallique, l'oxyde métallique étant une particule d'oxyde de fer magnétique, avec au moins un composé de formule générale (I)
R¹ₙ-Si(OR²)₄₋ₙ (I)
dans laquelle R¹, R² et n possèdent les significations suivantes :
R¹, indépendamment les uns des autres, hydrogène, C₁₋₃₀-alkyle linéaire ou ramifié, éventuellement fonctionnalisé, C₂₋₃₀-alcényle linéaire ou ramifié, éventuellement fonctionnalisé, C₂₋₃₀-alcynyle linéaire ou ramifié, éventuellement fonctionnalisé, C₃₋₂₀-cycloalkyle éventuellement fonctionnalisé, C₃₋₂₀-cycloalcényle éventuellement fonctionnalisé, C₁₋₂₀-hétéroalkyle éventuellement fonctionnalisé, C₅₋₂₂-aryle éventuellement fonctionnalisé, C₆₋₂₃-alkylaryle éventuellement fonctionnalisé, C₆₋₂₃-arylalkyle éventuellement fonctionnalisé, C₅₋₂₂-hétéroaryle éventuellement fonctionnalisé,
R², indépendamment les uns des autres, hydrogène, C₁₋₃₀-alkyle linéaire ou ramifié, éventuellement fonctionnalisé, C₂₋₃₀-alcényle linéaire ou ramifié, éventuellement fonctionnalisé, C₂₋₃₀-alcynyle linéaire ou ramifié, éventuellement fonctionnalisé, C₃₋₂₀-cycloalkyle éventuellement fonctionnalisé, C₃₋₂₀-cycloalcényle éventuellement fonctionnalisé, C₁₋₂₀-hétéroalkyle éventuellement fonctionnalisé, C₅₋₂₂-aryle éventuellement fonctionnalisé, C₆₋₂₃-alkylaryle éventuellement fonctionnalisé, C₆₋₂₃-arylalkyle éventuellement fonctionnalisé, C₅₋₂₂-hétéroaryle éventuellement fonctionnalisé,
NR¹₄⁺, R¹, indépendamment les uns des autres, pouvant posséder les significations mentionnées ci-dessus,
groupe de formule générale 1/(p-x^{∗}y)M^{p+}X^{x-}_{y}, M signifiant un atome de métal choisi dans le groupe constitué par des métaux des groupes principaux et secondaires du système périodique des éléments, X signifiant un anion, p signifiant l'indice d'oxydation de l'atome de métal M, x signifiant un nombre entier parmi 1, 2 et 3 et y signifiant un nombre entier parmi 0, 1 et 2, et/ou
groupe de formule générale (IIa)
-SiR¹ₘ(OR²)₃₋ₘ (IIa),
R¹ et R² possédant indépendamment les uns des autres les significations mentionnées ci-dessus et m pouvant signifier indépendamment l'un de l'autre 0, 1, 2 ou 3,
n 1, 2 ou 3,
et au moins un solvant, au moins une substance tensioactive ou un mélange correspondant, **caractérisé en ce que** dans le composé de formule générale (I) ou dans le groupe de formule générale (IIa) au moins un radical R² est NR¹₄⁺ ou un groupe de formule générale 1/(p-x^{∗}y)M^{p+}X^{x-}_{y}, avec les significations mentionnées ci-dessus pour R¹, p, x, y, M et X.

2. Mélange selon la revendication 1, **caractérisé en ce que** M est choisi dans le groupe 1, 2 ou 13 du système périodique des éléments (nomenclature UICPA).

3. Mélange selon la revendication 1 ou 2, **caractérisé en ce que** le rapport en masse de solvant sur particule modifiée est supérieur à 500.

4. Mélange selon l'une quelconque des revendications 1 à 3, **caractérisé en ce que** dans le composé de formule générale (I) n est 1 ou 2, préférablement 1.

5. Mélange selon l'une quelconque des revendications 1 à 4, **caractérisé en ce que** dans le composé de formule générale (I) ou dans le groupe de formule générale (IIa) au moins un R² est indépendamment les uns des autres méthyle ou éthyle.

6. Mélange selon l'une quelconque des revendications 1 à 5, **caractérisé en ce que** dans le composé de formule générale (I) ou dans le groupe de formule générale (IIa) au moins un R² est indépendamment les uns des autres un groupe de formule générale 1/(p-x^{∗}y)M^{p+}X^{x-}_{y}, avec p égal à 1, y égal à 0 et M égal à Na et/ou K.

7. Mélange selon l'une quelconque des revendications 1 à 6, **caractérisé en ce que** l'au moins un solvant est choisi dans le groupe constitué par des hydrocarbures aromatiques, des alcools, des éthers, des éthers cycliques, des esters, des esters cycliques, des alcanes, des cycloalcanes, des oléfines, des cyclooléfines, l'eau et des mélanges correspondants.

8. Mélange selon l'une quelconque des revendications 1 à 7, **caractérisé en ce que** l'au moins une substance tensioactive est choisie dans le groupe constitué par des tensioactifs non ioniques, anioniques, cationiques et zwitterioniques et des mélanges correspondants.

9. Mélange selon l'une quelconque des revendications 1 à 8, **caractérisé en ce que** l'oxyde de fer magnétique est choisi dans le groupe constitué par la magnétite, la maghémite, l'hématite, des ferrites cubiques de formule générale (III)
M²⁺ₓFe²⁺₁₋ₓFe³⁺₂O₄ (III)
avec
M choisi parmi Co, Ni, Mn, Zn et des mélanges correspondants et
x ≤ 1,
des ferrites hexagonales, et des combinaisons correspondantes, et est de préférence la magnétite.

10. Mélange selon l'une quelconque des revendications 1 à 9, **caractérisé en ce que** les particules présentent une grosseur de particule de 50 nm à 500 µm, préférablement 200 nm à 100 µm, particulièrement préférablement 500 nm à 10 µm.

11. Procédé pour la préparation d'une particule modifiée en surface comme définie dans la revendication 1 par la mise en contact de la particule d'oxyde métallique devant être modifiée, l'oxyde métallique étant un oxyde de fer magnétique, et d'un composé de formule générale (I) comme défini dans la revendication 1.

12. Procédé pour le traitement de particules modifiées en surface comme définies dans la revendication 1 avec au moins un solvant, **caractérisé en ce que** le rapport en masse de solvant sur particule modifiée est supérieur à 500.

13. Utilisation de particules modifiées en surface comme définies dans la revendication 1 dans des systèmes dans lesquels les particules modifiées sont mises en contact avec au moins un solvant, **caractérisée en ce que** le rapport en masse de solvant sur particule modifiée est supérieur à 500.

14. Utilisation de particules modifiées en surface comme définies dans la revendication 1 dans des cycles d'agglomération-désagglomération.

15. Utilisation selon la revendication 14, **caractérisée en ce que** le cycle d'agglomération-désagglomération est un procédé de test ou de séparation chimique, physique ou biologique, le nettoyage de terre contaminée, une purification d'eau, le recyclage de déchets électroniques ou une séparation par gravité.
